(19) Europäisches Patentamt
European Patent Office
Office européen des brevets

(11) **EP 4 661 484 A1**

(12) **EUROPEAN PATENT APPLICATION**
published in accordance with Art. 153(4) EPC

(43) Date of publication:
**10.12.2025 Bulletin 2025/50**

(21) Application number: 23920027.2

(22) Date of filing: **28.12.2023**

(51) International Patent Classification (IPC):
**H04W 28/04** *(2009.01)* **H04W 72/115** *(2023.01)*
**H04W 72/1268** *(2023.01)* **H04W 72/23** *(2023.01)*
**H04W 72/512** *(2023.01)*

(52) Cooperative Patent Classification (CPC):
**H04W 28/04; H04W 72/115; H04W 72/1268;
H04W 72/23; H04W 72/512**

(86) International application number:
**PCT/JP2023/047208**

(87) International publication number:
**WO 2024/161892 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.02.2023 JP 2023015570
11.05.2023 JP 2023078777**

(71) Applicant: **DENSO CORPORATION
Kariya-city, Aichi 448-8661 (JP)**

(72) Inventor: **NAGANO, Tatsuki
Kariya- city, Aichi 4488661 (JP)**

(74) Representative: **TBK
Bavariaring 4-6
80336 München (DE)**

(54) **TERMINAL DEVICE, METHOD FOR TERMINAL DEVICE, AND BASE STATION DEVICE**

(57) A terminal apparatus (10) receives, from a base station apparatus (20), a radio resource control (RRC) message including a configured grant (CG) configuration for configuring transmission of a physical uplink shared channel (PUSCH) based on a CG grant, and determines, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID.

Fig. 13

## Description

### Cross-Reference To Related Application

The present application is based on and claims priority benefit of Japanese Patent Application No. 2023-15570 filed on February 3, 2023 and Japanese Patent Application No. 2023-78777 filed on May 11, 2023, each of which is incorporated herein by reference in its entirety.

### Technical Field

The present disclosure relates to a terminal apparatus, a method of a terminal apparatus and a base station apparatus.

### Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

In NPL 1, implementation of XR in Fifth Generation New Radio (5G NR) being radio specifications defined by the Third Generation Partnership Project (3GPP (trademark)) is studied.

### Citation List

### Non Patent Literature

[NPL 1] 3GPP TR 38.838 V17.0.0 (2021-12)
[NPL 2] 3GPP TS 38.321 V17.2.0 (2022-09)

## SUMMARY

It is assumed that XR is implemented under various requirements including the low latency requirement. For XR traffic, use of scheduling by configured grant (CG) instead of scheduling by dynamic grant (DG) is studied for uplink transmission from a terminal apparatus. In an existing configuration, one transmission occasion is configured in a single period of CG. In relation to this, the inventors of the present invention have found an issue that this configuration has the possibility of not being able to satisfy the XR requirements.

In view of the above, CG that configures a plurality of transmission occasions in one period is studied. However, a procedure for appropriately determining pieces of information to be associated with a plurality of respective transmission occasions is not described in NPL 2. Note that an example of such pieces of information to be associated with a plurality of respective transmission occasions is a hybrid automatic repeat request (HARQ) process identifier. The issue also occurs in a general terminal apparatus and a general base station apparatus other than those with XR implementation.

The present disclosure provides a technique for appropriately determining HARQ process identifiers to be associated with a plurality of respective transmission occasions.

A terminal apparatus according to the present disclosure includes a receiver configured to receive, from a base station apparatus, a radio resource control (RRC) message including a configured grant (CG) configuration for configuring transmission of a physical uplink shared channel (PUSCH) based on a CG grant, a controller configured to determine, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID, and a transmitter configured to perform each of the plurality of PUSCH transmissions related to the HARQ process ID, in the periodicity.

Further, a method of a terminal apparatus according to the present disclosure includes receiving, from a base station apparatus, a radio resource control (RRC) message including a configured grant (CG) configuration for configuring transmission of a physical uplink shared channel (PUSCH) based on a CG grant, determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID, and performing each of the plurality of PUSCH transmissions related to the HARQ process ID, in the periodicity.

Furthermore, a base station apparatus according to the present disclosure includes a transmitter configured to transmit, to a terminal apparatus, a radio resource control (RRC) message including a configured grant (CG) configuration for configuring transmission of a physical uplink shared channel (PUSCH) based on a CG grant, a controller configured to determine, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID, and a receiver configured to receive each of the plurality of PUSCH transmissions related to the HARQ process ID, in the periodicity.

According to the above configurations, it is possible to appropriately determine HARQ process identifiers to be associated with a plurality of respective transmission occasions. Note that the configurations above may exert, instead of or together with the above advantageous effects, other advantageous effects.

## BRIEF DESCRIPTION OF THE DRAWINGS

The above and other objects, features, and advantages of the present disclosure will become more apparent in the following detailed description with reference to the accompanying drawings. The drawings are as follows:

Fig. 1 is a diagram illustrating a communication system S according to a first embodiment;
Fig. 2 is a diagram illustrating a U-plane protocol stack according to the first embodiment;
Fig. 3 is a diagram illustrating a C-plane protocol stack according to the first embodiment;
Fig. 4 is a block diagram illustrating a schematic hardware configuration of a terminal apparatus 10 according to the first embodiment;
Fig. 5 is a block diagram illustrating a schematic functional configuration of the terminal apparatus 10 according to the first embodiment;
Fig. 6 is a block diagram illustrating a schematic hardware configuration of a base station apparatus 20 according to the first embodiment;
Fig. 7 is a block diagram illustrating a schematic functional configuration of the base station apparatus 20 according to the first embodiment;
Fig. 8 is a diagram illustrating a radio frame configuration according to the first embodiment;
Fig. 9 is a sequence diagram illustrating steps of processing of CG Type 1;
Fig. 10 is a sequence diagram illustrating steps of processing of CG Type 2;
Fig. 11 is a diagram for describing CG in which one transmission occasion is configured in one period;
Fig. 12 is a diagram for describing CG in which a plurality of transmission occasions are configured in one period;
Fig. 13 is a diagram for describing processing for determining HARQ process IDs according to a first aspect according to the first embodiment;
Fig. 14 is a diagram for describing processing for determining HARQ process IDs according to a second aspect according to the first embodiment;
Fig. 15 is a diagram for describing processing for determining HARQ process IDs according to a third aspect according to the first embodiment;
Fig. 16 is a diagram for describing processing for determining HARQ process IDs according to a fourth aspect according to the first embodiment;
Fig. 17 is a diagram for describing processing for determining HARQ process IDs according to a first aspect according to the second embodiment;
Fig. 18 is a diagram for describing processing for determining HARQ process IDs according to a second aspect according to the second embodiment;
Fig. 19 is a diagram for describing processing for transmitting dynamic indication of an unused occasion(s) according to a first aspect according to a third embodiment;
Fig. 20 is a diagram for describing processing for transmitting dynamic indication of an unused occasion(s) according to a second aspect according to the third embodiment; and
Fig. 21 is a diagram for describing processing for determining HARQ process IDs according to a fourth embodiment.

## DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed unless the configurations are consistent with each other.

1. First Embodiment

1.1. Communication System

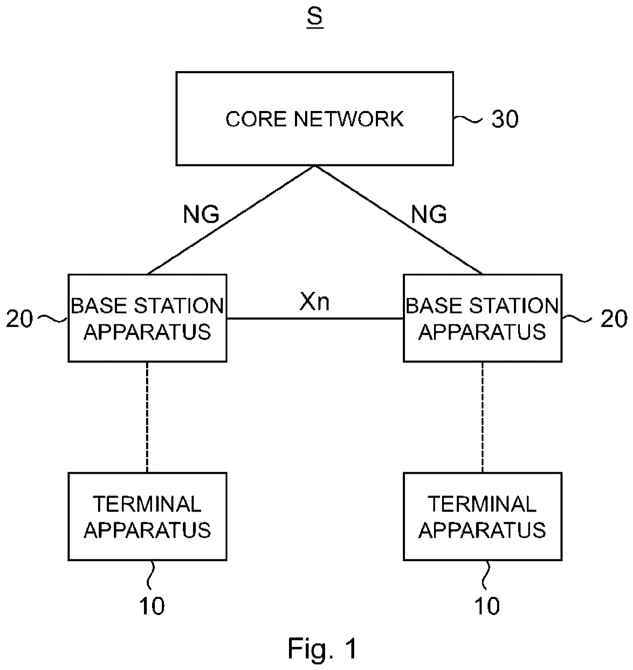

As illustrated in Fig. 1, a communication system S according to a first embodiment includes one or more terminal apparatuses 10, one or more base station apparatuses 20, and a core network 30. The communication system S is configured in accordance with certain technical specifications (TS). For example, the communication system S may be compliant with technical specifications defined by 3GPP (for example, 5G, 5G advanced, 6G, or the like).
In the communication system S1, a user plane in which user data is transmitted and received and a control plane in which control data is transmitted and received are separately configured. In other words, the communication system S1 supports C/U split. The user plane is abbreviated to the U plane, and the control plane is abbreviated to the C plane.
The terminal apparatus 10 may be a device that performs radio communication with the base station apparatus 20, and may be, for example, a user equipment (UE) that operates in accordance with 5G NR specifications of 3GPP. The terminal apparatus 10 may be an apparatus that is compliant with other older or newer 3GPP specifications.
The terminal apparatus 10 may be, for example, a mobile phone terminal such as a smartphone, a tablet terminal, a notebook PC, a communication module, a communication card, or an IoT device such as a surveillance camera and a robot. The terminal apparatus 10 may be a vehicle (for example, a car, a train, or the like), or an apparatus mounted on the vehicle. The terminal apparatus 10 may be a transport machine body other than the vehicle (for example, a ship, an airplane, or the like), or an apparatus mounted on the transport machine body. The terminal apparatus 10 may be a sensor, or an apparatus provided with the sensor. Note that the terminal apparatus 10 may be referred to as another name such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 is preferably an apparatus adapted to one or more of enhanced mobile broadband (eMBB), ultra-reliable and low-latency communications (URLLC), and massive machine type communications (mMTC).
The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.
The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.
The base station apparatus 20 may be a gNB that provides the terminal apparatus 10 with the U plane and the C plane conforming to 5G New Radio (NR) specifications of 3GPP and connects to a 5G core network (5GC) of 3GPP, for example. The base station apparatus 20 may be an apparatus conforming to other older or newer specifications of 3GPP.
The base station apparatus 20 may be configured by a plurality of unit apparatuses. For example, the base station apparatus 20 may include a central unit (CU), a distributed unit (DU), and a radio unit (RU).
With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.
The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.
Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

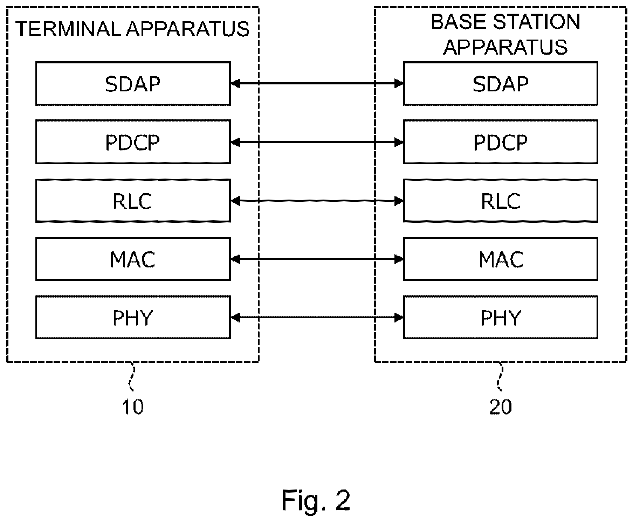

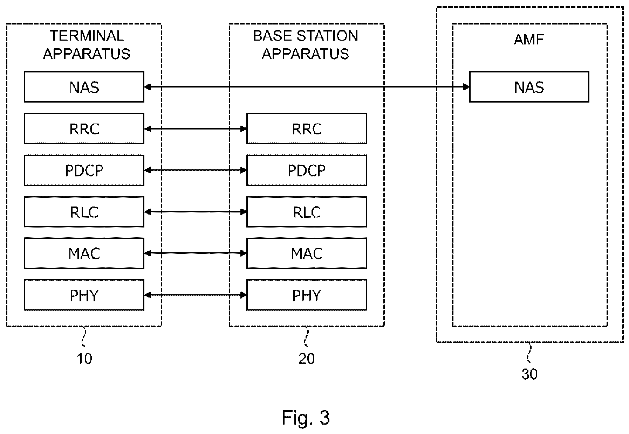

With reference to Fig. 2, a radio protocol architecture between the terminal apparatus 10 and the base station apparatus 20 will be described. With reference to Fig. 3, radio protocol architectures between the terminal apparatus 10 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side.

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). Each of the layers, except the Non-Access Stratum, is terminated in the base station apparatus 20 on the network side. The Non-Access Stratum is terminated in the AMF of the core network 30 on the network side.

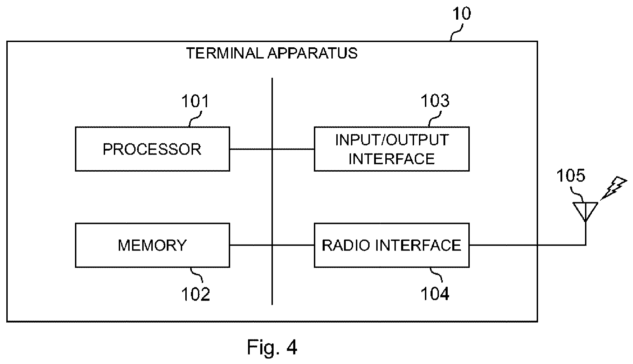

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user. The input/output interface 103 is a touch panel, for example.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

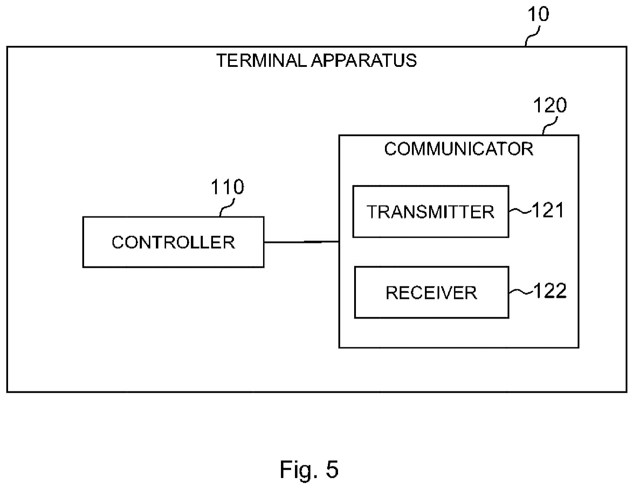

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120. In other words, the controller 110 performs, via the communicator 120, transmission/reception of data/information/message.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. The communicator 120 may include two or more radio interfaces 104 and two or more antennas 105.

When the controller 110 operates, the various types of processing of the terminal apparatus 10 according to the present embodiment are executed.

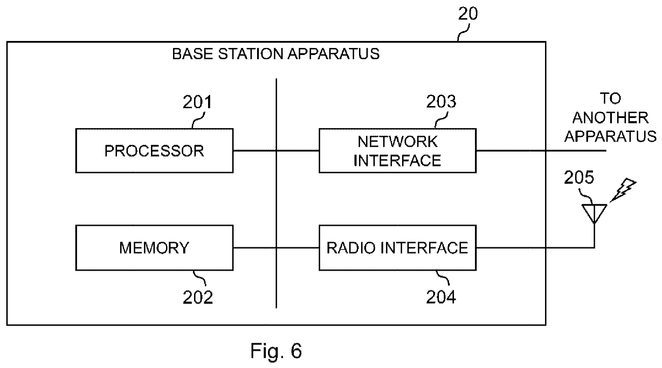

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the terminal apparatus 10 via the antenna 205.

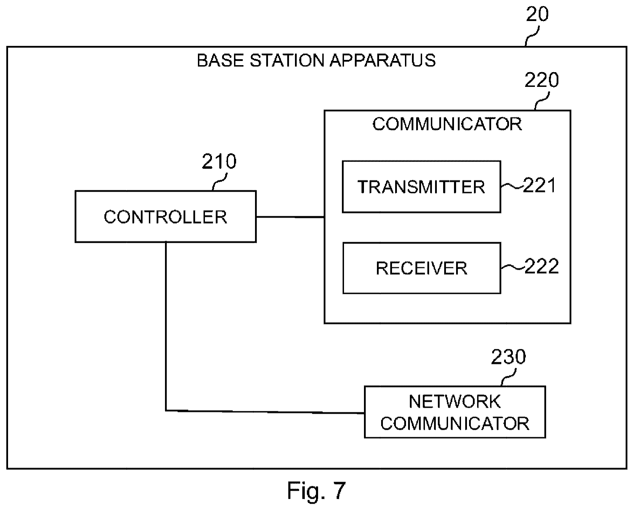

As illustrated in Fig. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. In other words, the controller 210 performs, via the communicator 220, transmission/reception of data/information/message. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. The communicator 220 may include two or more radio interfaces 204 and two or more antennas 205.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 according to the present embodiment are executed.

1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period (GP) for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) $\Delta f$ in the frequency domain. In the communication system S, a plurality of subcarrier spacings $\Delta f$ may be applied. The subcarrier spacing $\Delta f$ is expressed by the following expression, for example.

$$\Delta f = 2^{\mu} \cdot 15 \text{ [kHz]}$$

Here, $\mu$ is an integer of 0 or greater, and may be any one of values of 0, 1, 2, 3, 4, 5, and 6. Accordingly, the subcarrier spacing $\Delta f$ [kHz] may be any one of values of 15, 30, 60, 120, 240, 480, and 960. Note that $\mu$ may be a value of 7 or greater.

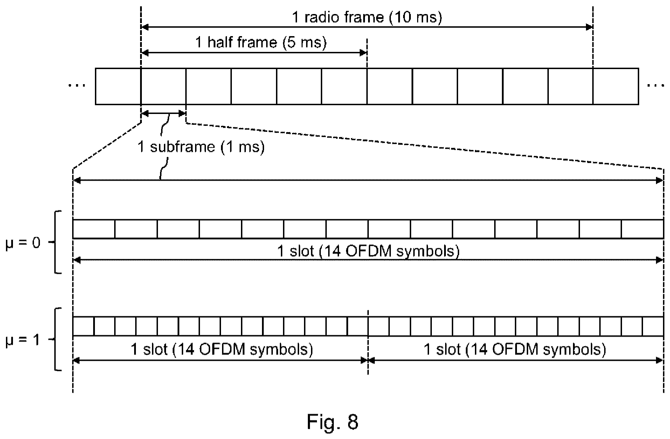

In the time domain of OFDM, as illustrated in Fig. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing $\Delta f$.

One subframe includes one or more slots. The number Ns of slots included in one subframe is dependent upon the value of $\mu$ described above, ultimately the subcarrier spacing $\Delta f$. The number Ns of slots is expressed by the following expression, for example.

$$Ns = 2^{\mu}$$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink common channel (DownLink Shared Channel, DL-SCH) and an uplink common channel (UpLink Shared Channel, UL-SCH). For example, data in downlink is also referred to as data of the DL-SCH. For example, data in uplink is also referred to as data of the UL-SCH. Here, the data of the DL-SCH includes user data in downlink. The data of the UL-SCH includes user data in uplink.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. In the present embodiment, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

The terminal apparatus 10 may monitor (and/or receive) the PDCCH and detect (and/or receive) the DCI format.

The terminal apparatus 10 transmits, to the base station apparatus 20, uplink control information (UCI) by using a PUCCH being a physical channel. The UCI includes control information such as a scheduling request (SR), an Ack/Nack in HARQ, and channel state information (CSI). The UCI is mapped to the PUCCH or the PUSCH, and corresponds to Layer 1 signaling.

The base station apparatus 20 transmits, to the terminal apparatus 10, a control element (CE) of a MAC layer by using a DL-SCH being a transport channel. The downlink MAC CE is mapped to a PDSCH via the DL-SCH, and corresponds to Layer 2 signaling.

The terminal apparatus 10 transmits, to the base station apparatus 20, a control element (CE) of a MAC layer by using a UL-SCH being a transport channel. The uplink MAC CE includes control information such as buffer status reporting (BSR). The uplink MAC CE is mapped to a PUSCH via the UL-SCH, and corresponds to Layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation) message will be described. The user equipment assistance information message is an RRC message transmitted from the terminal apparatus 10 to the base station apparatus 20 using SRB1 or SRB3. The DCCH is used to transmit the user equipment assistance information message. The user equipment assistance information message is used to notify the base station apparatus 20 of various pieces of information (UE assistance information) related to the terminal apparatus 10.

## 1.4. Uplink Scheduling

### 1.4.1. Scheduling Request (SR)

An SR is used for the terminal apparatus 10 to request the base station apparatus 20 to allocate a radio resource for a PUSCH. The SR may be used to request a UL-SCH resource for initial transmission. The base station apparatus 20 allocates a resource for a PUCCH for transmitting the SR, to the terminal apparatus 10. The base station apparatus 20 transmits an RRC message including an SR parameter to the terminal apparatus 10. The SR parameter is included in a SchedulingRequestResourceConfig information element (IE), which is an example of an RRC IE.

The terminal apparatus 10 uses the configured PUCCH resource to transmit UCI including the SR to the base station apparatus 20. The terminal apparatus 10 may transmit the UCI on demand. The terminal apparatus 10 may transmit the UCI at configured periodicity. For example, the terminal apparatus 10 may transmit an SR set at "0" (negative SR) and/or an SR set at "1" (positive SR). The base station apparatus 20 allocates a radio resource for the PUSCH, to the terminal apparatus 10 according to the SR.

### 1.4.2. Configured Grant (CG)

CG is a scheduling method for allocating a radio resource for a PUSCH without the SR transmission procedure. The base station apparatus 20 transmits an RRC message including a CG parameter to the terminal apparatus 10. The CG parameter is included in a ConfiguredGrantConfig information element (IE), which is an example of an RRC IE.

For example, the base station apparatus 20 may transmit an RRC message including a parameter related to CG (i.e., a ConfiguredGrantConfig IE) for a given serving cell, to the terminal apparatus 10. In other words, the parameter related to CG (i.e., a ConfiguredGrantConfig IE) may be configured for one or each of a plurality of serving cells. The base station apparatus 20 may transmit an RRC message including a parameter related to CG (i.e., a ConfiguredGrantConfig IE) for a given UL-BWP, to the terminal apparatus 10. In other words, the parameter related to CG (i.e., a Configured-GrantConfig IE) may be configured for one or each of a plurality of UL-BWPs. The terminal apparatus 10 may identify the parameter related to CG (i.e., the ConfiguredGrantConfig IE) for the one or each of the plurality of UL-BWPs.

The ConfiguredGrantConfig IE includes a parameter periodicity related to periodicity of transmission using a PUSCH. Note that the parameter periodicity is configured in units of the number of slots or the number of symbols. Alternatively, the parameter periodicity may be configured in units of frame per second (FPS).

CG includes two types, i.e., Type 1 and Type 2. Each of Type 1 and Type 2 will be described below.

### (1) Type 1

In Type 1, the terminal apparatus 10 performs transmission of a signal at configured periodicity without trigger by DCI.

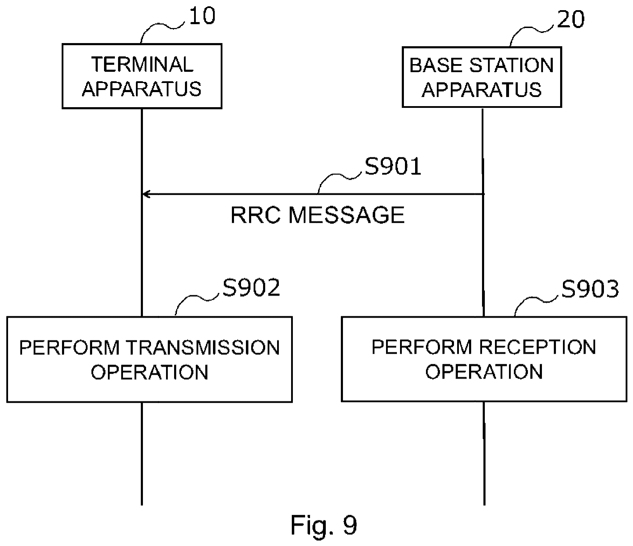

As illustrated in Fig. 9, the communicator 220 of the base station apparatus 20 transmits an RRC message including a CG parameter to the terminal apparatus 10 (S901).

The controller 110 of the terminal apparatus 10 performs a periodic PUSCH transmission operation (S902). For example, the terminal apparatus 10 may store the RRC message including the CG parameter, as a configured uplink grant. Here, such an RRC message including a CG parameter to be used for scheduling of a PUSCH is also referred to as an uplink grant. The terminal apparatus 10 may regard that, after an uplink grant is configured for CG Type 1, the uplink grant sequentially occurs (is repeated) in SFNs and/or slot numbers satisfying a certain mathematical expression. In other words, the terminal apparatus 10 may regard that the stored uplink grant sequentially occurs in the SFNs and/or slot numbers satisfying the certain mathematical expression, to perform PUSCH transmission.

The controller 210 of the base station apparatus 20 performs a periodic PUSCH reception operation (S903). The controller 210 may regard that the uplink grant stored in the terminal apparatus 10 sequentially occurs (is repeated) in the SFNs and/or slot numbers satisfying the certain mathematical expression, to perform PUSCH reception.

Note that, for one or more serving cells or one or more UL-BWPs, a plurality of CGs may be configured for the terminal apparatus 10. For example, the base station apparatus 20 may transmit an RRC message including a parameter related to a first CG and a parameter related to a second CG, to the terminal apparatus 10. The terminal apparatus 10 may perform transmission of a first PUSCH associated with the first CG and perform transmission of a second PUSCH associated with the second CG.

(2) Type 2

In Type 2, the terminal apparatus 10 performs transmission of a signal at configured periodicity in response to activation by DCI scrambled with a CS-RNTI.

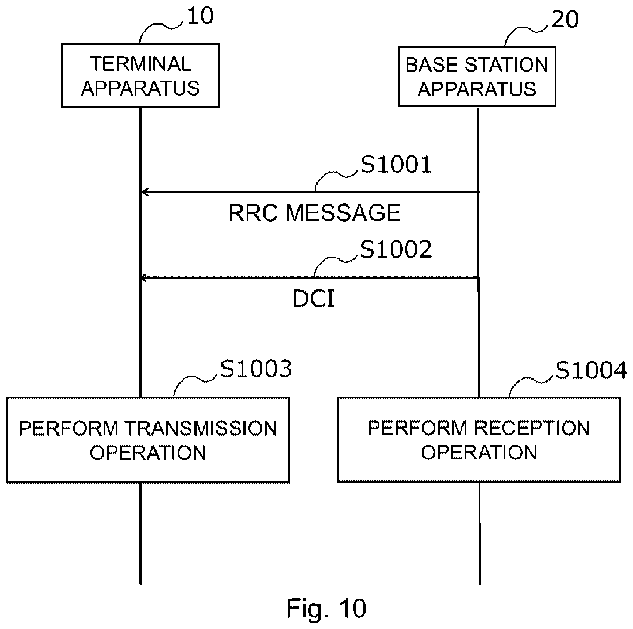

As illustrated in Fig. 10, the communicator 220 of the base station apparatus 20 transmits an RRC message including a CG parameter to the terminal apparatus 10 (S 1001). Next, the communicator 220 transmits DCI scrambled with a CS-RNTI to the terminal apparatus 10 (S 1002). Through this, a periodic transmission operation by the terminal apparatus 10 using a PUSCH is activated.

The controller 110 of the terminal apparatus 100 performs a periodic transmission operation (S1003). For example, when DCI with CRC scrambled with a CS-RNTI being attached (i.e., DCI to be used for scheduling of the PUSCH) indicates activation of CG (in other words, when a PDCCH indicates activation of CG), the terminal apparatus 10 may store the DCI as a configured uplink grant. Here, such DCI (DCI format) to be used for scheduling of a PUSCH is also referred to as an uplink grant. The terminal apparatus 10 may regard that, after an uplink grant is configured for CG Type 2, the uplink grant sequentially occurs (is repeated) in SFNs and/or slot numbers satisfying a certain mathematical expression. In other words, the terminal apparatus 10 may regard that the stored uplink grant sequentially occurs in the SFNs and/or slot numbers satisfying the certain mathematical expression, to perform PUSCH transmission.

The controller 210 of the base station apparatus 20 performs a periodic PUSCH reception operation (S1004). The controller 210 may regard that the uplink grant stored in the terminal apparatus 10 sequentially occurs (is repeated) in the SFNs and/or slot numbers satisfying the certain mathematical expression, to perform PUSCH reception.

Note that, for one or more serving cells or one or more UL-BWPs, a plurality of CGs may be configured for the terminal apparatus 10. For example, the base station apparatus 20 may transmit an RRC message including a parameter related to a first CG and a parameter related to a second CG, to the terminal apparatus 10. When the first CG is activated by DCI, the terminal apparatus 10 may perform transmission of a first PUSCH associated with the first CG. When the second CG is activated by DCI, the terminal apparatus 10 may perform transmission of a second PUSCH associated with the second CG.

1.5. Hybrid Automatic Retransmission Request (HARQ)

HARQ is a mechanism for controlling error correction and retransmission request. Upon detection of an error in data received from a sender, a receiver requests the sender to retransmit the data. The receiver combines data received previously and retransmitted data to acquire data.

Note that HARQ is a stop-and-wait (SAW) protocol. In a case where the receiver receives the data correctly, the receiver transmits acknowledgement (ACK) to the sender. Upon receipt of Ack, the sender transmits the next data. Hence, in HARQ, the sender cannot transmit the next data before completion of data reception by the receiver.

In the following, a case where a transmission occasion(s) for a PUSCH is configured by CG will be described.

The base station apparatus 20 may transmit an RRC message including a parameter related to the PUSCH to the terminal apparatus 10. The parameter related to the PUSCH is included in a PUSCH-ServingCellConfig information element (IE), which is an example of an RRC IE.

An HARQ entity in the terminal apparatus 10 can include one or more HARQ processes. In a case of uplink transmission, the terminal apparatus 10 supports up to 16 or 32 HARQ processes per cell. The number of HARQ processes is configured by nrofHARQ-ProcessesForPUSCH included in the parameter related to the PUSCH (i.e., a PUSCH-ServingCellConfig IE). When nrofHARQ-ProcessesForPUSCH is absent in PUSCH-ServingCellConfig IE, the number of HARQ processes is configured at 16 by default.

In a case of uplink transmission, each HARQ process supports one transport block (TB). In other words, one TB is transmitted in one transmission occasion. One HARQ process identifier is associated with (or assigned to) one HARQ process. In the following, an HARQ process identifier is referred to as an "HARQ process ID".

When a transmission occasion is configured by CG, the terminal apparatus 10 calculates an HARQ process ID by using mathematical expression A below. Similarly, the base station apparatus 20 calculates an HARQ process ID by using mathematical expression A.

[Math. 1]

$$\text{HARQ Process ID} =$$
$$[floor(CURRENT\_symbol/periodicity)] \text{ modulo nrofHARQ-Processes}$$
$$\text{where CURRENT\_symbol} =$$
$$(SFN \times numberOfSlotsPerFrame \times numberOfSymbolsPerSlot + \text{slot}$$
$$\text{number in the frame} \times numberOfSymbolsPerSlot + \text{symbol number in}$$
$$\text{the slot})$$

$$\cdots \text{(A)}$$

Parameters in mathematical expression A are as follows.

- periodicity: periodicity configured for PUSCH transmission
- nrofHARQ-Processes: the number of HARQ processes
- SFN: system frame number
- numberOfSlotsPerFrame: the number of slots included in one radio frame
- numberOfSymbolsPerSlot: the number of symbols included in one slot

The terminal apparatus 10 associates the HARQ process ID calculated by using mathematical expression A, with the HARQ process. The terminal apparatus 10 may transmit a PUSCH to the base station apparatus 20 in the configured transmission occasion.

Note that, when a plurality of CGs are configured, the terminal apparatus 10 may calculate an HARQ process ID by using mathematical expression B below. Similarly, the base station apparatus 20 may calculate an HARQ process ID by using mathematical expression B.

[Math. 2]

$$\text{HARQ Process ID} =$$
$$[floor(CURRENT\_symbol / periodicity)] \text{ modulo nrofHARQ-Processes}$$
$$+ \text{ harq-ProcID-Offset2}$$

$$\cdots \text{(B)}$$

Current_symbol in mathematical expression B is calculated by the same expression as mathematical expression A. harq-ProcID-Offset2 is an offset value used to configure an HARQ process ID used in each CG configuration to be a different value in uplink transmission. harq-ProcID-Offset2 is included in a parameter related to CG (i.e., a Configured-GrantConfig IE).

1.5. Extended Reality (eXtended Reality, XR)

Characteristics of traffic generated in XR will be described. In XR, a plurality of types of data (video data, voice data, user data, control data, and the like) are transmitted and received in parallel. A plurality of data streams corresponding to the data segments have different traffic characteristics and quality of service (QoS) requirements.

At timings of transmission and reception of the data, time shifts expressed as jitter, variability, and fluctuation may occur due to factors such as encoding of a video and audio and network latency.

Reference Literature 1 describes that the following definitions can be introduced for transmission and reception in XR.

[Reference Literature 1] 3GPP TR 23.700-60 V1.1.0 (2022-09)

PDU set: a set of PDUs including one or more PDUs carrying a payload of one unit of information generated at an application level. The application level corresponds, for example, to a frame or a video slice in an XR service.

Data burst: a set of datamultiple PDUs generated and sent by an application in a short period of time.

Furthermore, for XR, requirements of a packet delay budget (PDB) as the QoS requirements have been studied. The PDB is an upper bound of packet delay time allowed between the terminal apparatus 10 and the UPF. Note that Reference Literature 1 also describes that the following new QoS parameters can be introduced.

PDU-set delay budget (PSDB): an upper bound of PDU-set delay time allowed between the terminal apparatus 10 and the UPF.

PDU-set error rate (PSER): an upper bound of an error rate calculated between a PDU set processed by a sender, and all the PDUs in a PDU set that has not successfully delivered to an upper layer of a corresponding receiver.

1.6. CG Enhancement

1.6.1. Basic Configuration

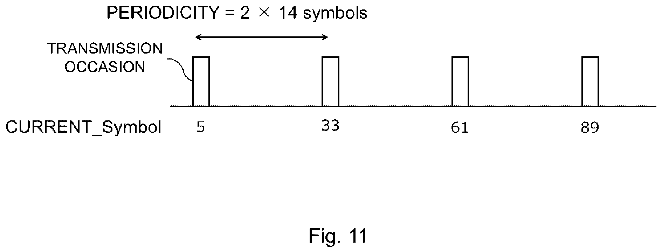

It is assumed that XR is operated under the various requirements described above. With this, use of scheduling by CG instead of scheduling by DG is studied for uplink transmission from a terminal apparatus. As illustrated in Fig. 11, in an existing configuration, one transmission occasion is configured in a single period of CG. The period corresponds to periodicity with a CG parameter described above. In the example in Fig. 11, periodicity is equal to $2 \times 14$ symbols.

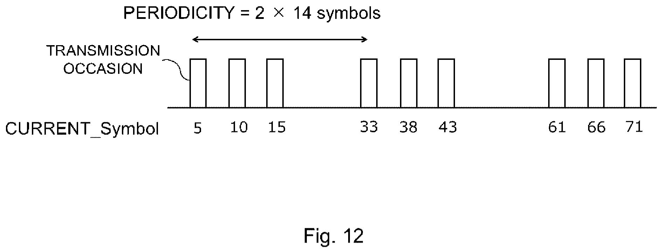

The configuration in Fig. 11 has the possibility of not satisfying the XR requirements. In view of this, in the present embodiment, as illustrated in Fig. 12, a plurality of transmission occasions are configured in a single period for PUSCH. In the example in Fig. 12, periodicity is equal to $2 \times 14$ symbols. The number Nt of transmission occasions included in one period is three (Nt = 3). Further, an interval In between adjacent transmission occasions included in one period corresponds to five symbols.

However, a procedure for appropriately determining pieces of information to be associated with a plurality of respective transmission occasions is not described in NPL 2. An example of such pieces of information to be associated with a plurality of respective transmission occasions is an HARQ process ID. The present embodiment provides a procedure for determining HARQ process IDs to be associated with a plurality of respective transmission occasions.

Specifically, the terminal apparatus 10 determines, by using configuration information related to a plurality of transmission occasions included in one period in CG, HARQ process IDs to be associated with the plurality of respective transmission occasions. The "configuration information related to a plurality of transmission occasions included in one period in CG" is referred to simply as "configuration information" to simplify expression, below. The terminal apparatus 10 performs uplink transmission (i.e., PUSCH transmission) corresponding to an HARQ process, to the base station apparatus 20. Note that at least one of the plurality of transmission occasions need not be used for uplink transmission.

Configuration information may be configured for one or each of a plurality of serving cells. In another example, configuration information may be configured for one or each of a plurality of UL-BWPs.

The base station apparatus 20 may transmit configuration information to the terminal apparatus 10. The terminal apparatus 10 may determine, by using the configuration information received from the base station apparatus 20, HARQ process IDs to be associated with the plurality of respective transmission occasions.

The configuration information may be stored in the terminal apparatus 10 in advance. The terminal apparatus 10 may acquire configuration information from the terminal apparatus 10 itself. The terminal apparatus 10 may determine, by using the configuration information thus acquired, HARQ process IDs to be associated with the plurality of respective transmission occasions.

Similarly, the base station apparatus 20 determines, by using the configuration information, HARQ process IDs to be associated with the plurality of respective transmission occasions. The base station apparatus 20 receives uplink transmission corresponding to an HARQ process from the terminal apparatus 10.

The base station apparatus 20 may determine, by using the configuration information transmitted to the terminal apparatus 10, HARQ process IDs to be associated with the plurality of respective transmission occasions.

The base station apparatus 20 may receive the configuration information from the terminal apparatus 10. The base station apparatus 20 may determine, by using the configuration information thus received, HARQ process IDs to be associated with the plurality of respective transmission occasions.

First to fourth aspects will be described below as aspects of processing for determining HARQ process IDs.

(1) First Aspect

Configuration information may include first information indicating HARQ process IDs of a plurality of respective transmission occasions.

The base station apparatus 20 may transmit an RRC message including the first information to the terminal apparatus 10 in step S901 in Fig. 9. The base station apparatus 20 may transmit an RRC message including the first information to the terminal apparatus 10 in step S1001 in Fig. 10. The first information may be configured as a new element of a ConfiguredGrantConfig IE. The first information may be configured in an IE other than a ConfiguredGrantConfig IE. The base station apparatus 20 may transmit system information (SI, for example, SIB1 and/or SIB other than SIB1) including the first information to the terminal apparatus 10. The base station apparatus 20 may transmit DCI including the first information to the terminal apparatus 10 in step S1002 in Fig. 10.

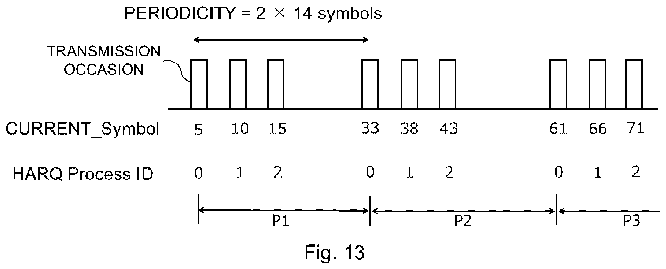

CG periodicity, the number Nt of transmission occasions, and an interval In between transmission occasions in Fig. 13 are the same as those in the example in Fig. 12. The example in Fig. 13 includes a first period P1, a second period P2, and a third period P3.

The first information may be a sequence of HARQ process IDs. For example, the first information may be a sequence {0, 1, 2}. In this case, the controller 110 of the terminal apparatus 10 may determine, by using the sequence, HARQ process IDs to be associated with the plurality of respective transmission occasions.

The controller 110 may assign the sequence to the plurality of transmission occasions in the sorting order. Specifically, the controller 110 assigns an HARQ process ID "0" to the first transmission occasion in the first period P1. The controller 110 assigns an HARQ process ID "1" to the second transmission occasion in the first period P1. The controller 110 assigns an HARQ process ID "2" to the third transmission occasion in the first period P1. In this way, the controller 110 may associate a plurality of values included in the sequence with the plurality of respective transmission occasions. The controller 110 may also associate a plurality of values included in the sequence with the plurality of respective transmission occasions in the second period P2 and the third period P3 in a similar manner.

The first information may include a plurality of sequences. For example, the first information may include two sequences {0, 1, 2} and {3, 4, 5}. The controller 110 may select a sequence to be associated with a plurality of transmission occasions, for each period. For example, the controller 110 may apply the sequence {0, 1, 2} to the first period P1. The controller 110 assigns an HARQ process ID "0" to the first transmission occasion in the first period P1. The controller 110 assigns an HARQ process ID "1" to the second transmission occasion in the first period P1. The controller 110 assigns an HARQ process ID "2" to the third transmission occasion in the first period P1.

For example, the controller 110 may apply the sequence {3, 4, 5} to the second period P2. The controller 110 assigns an HARQ process ID "3" to the first transmission occasion in the second period P2. The controller 110 assigns an HARQ process ID "4" to the second transmission occasion in the second period P2. The controller 110 assigns an HARQ process ID "5" to the third transmission occasion in the third period P3.

Note that the first information may include one or more parameters for selecting a sequence from a plurality of sequences. The controller 110 may select a sequence to apply to each period from the plurality of sequences, according to the parameter(s).

According to the above configurations, the terminal apparatus 10 can determine, by using the first information, HARQ process IDs to be associated with a plurality of respective transmission occasions included in one period. Similarly, the base station apparatus 20 can determine, by using the first information, HARQ process IDs to be associated with the plurality of respective transmission occasions included in one period.

(2) Second Aspect

In the following, mathematical expression A described above will be referred to as a "first mathematical expression". The first mathematical expression is a mathematical expression used when one period includes one transmission occasion. In contrast to this, in this aspect, the second mathematical expression, which is different from the first mathematical expression, is used. The second mathematical expression is a mathematical expression used when one period includes a plurality of transmission occasions. The second mathematical expression is a mathematical expression with which an HARQ process ID can be individually calculated for each of a plurality of transmission occasions.

The configuration information may include second information indicating use of the second mathematical expression.

The second information may be information explicitly indicating use of the second mathematical expression or information implicitly indicating use of the second mathematical expression. An example of explicit information and an example of implicit information will be described below.

- Explicit Information

The second information may be "information indicating whether or not to use the second mathematical expression". The second information may indicate "use of the second mathematical expression" or "no use of the second mathematical expression". The second information may be a flag indicating "use of the second mathematical expression" or "no use of the second mathematical expression". The second information may indicate "use of the second mathematical expression" or "no use of the second mathematical expression" depending on whether or not the second information is present. For example, when the second information is present, this may indicate use of the second mathematical expression. When the second information is not present, this may indicate no use of the second mathematical expression. Note that "no use of the second mathematical expression" above may be interpreted as "use of a mathematical expression different from the second mathematical expression". For example, "no use of the second mathematical expression" may be interpreted as "use of the first mathematical expression".

- Implicit Information

The second information may be information related to a plurality of transmission occasions included in one period. For example, the second information may include one of, or a combination of two or more of the following (a1) to (a3).

(a1) the number Nt of transmission occasions included in one period
(a2) interval In between adjacent transmission occasions included in one period
(a3) offset value Ofs for HARQ process IDs

The interval In between transmission occasions may be referred to as inner periodicity. For example, similarly to the parameter periodicity, the interval In between transmission occasions may be configured in units of the number of slots, the number of symbols, or FPS. For example, the offset value Ofs is an offset value used in a case where one period includes a plurality of transmission occasions. The offset value Ofs may be an offset value of HARQ process IDs between adjacent transmission occasions. Specifically, in a case where the offset value Ofs is "2", the HARQ process IDs of the adjacent transmission occasions may be configured such that the difference between the HARQ process IDs of the adjacent transmission occasions would be 2.

Upon receipt of at least one of (a1) to (a3) from the base station apparatus 20, the terminal apparatus 10 may determine that the base station apparatus 20 indicates use of the second mathematical expression. With no receipt of any of (a1) to (a3) from the base station apparatus 20, the terminal apparatus 10 may determine that the base station apparatus 20 indicates no use of the second mathematical expression.

The base station apparatus 20 may transmit an RRC message including the second information to the terminal apparatus 10 in step S901 in Fig. 9. The base station apparatus 20 may transmit an RRC message including the second information to the terminal apparatus 10 in step S 1001 in Fig. 10. The second information may be configured as a new element of a ConfiguredGrantConfig IE. The second information may be configured in an IE other than a ConfiguredGrantConfig IE. The base station apparatus 20 may transmit system information (SI, for example, SIB1 and/or SIB other than SIB1) including the second information to the terminal apparatus 10. The base station apparatus 20 may transmit DCI including the second information to the terminal apparatus 10 in step S 1002 in Fig. 10.

In a case where the second information indicates use of the second mathematical expression, the controller 110 of the terminal apparatus 10 may determine, by using the second mathematical expression, HARQ process IDs to be associated with the plurality of respective transmission occasions.

In a case where the second information indicates no use of the second mathematical expression, the controller 110 may use the first mathematical expression. In other words, the controller 110 may switch the mathematical expression to be used between the first mathematical expression and the second mathematical expression according to the second information.

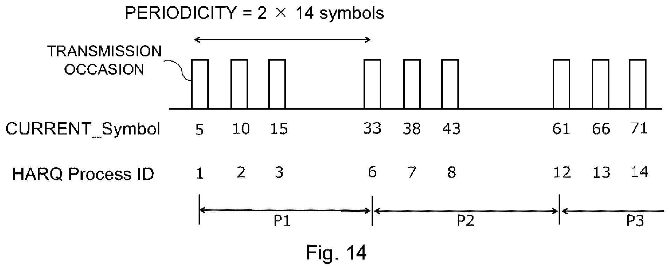

For example, the second mathematical expression may be mathematical expression C below. Mathematical expression C is a mathematical expression commonly used in a case where one period includes a plurality of transmission occasions. CURRENT_symbol is the same as that in the first mathematical expression (i.e., mathematical expression A). nrofHARQ-Processes corresponds to the number of HARQ processes and is 15 in this example. CG periodicity, the number Nt of transmission occasions, and an interval In (i.e., inner periodicity) between transmission occasions in Fig. 14 are the same as those in the example in Fig. 12. As illustrated in Fig. 14, the controller 110 determines, by using mathematical expression C as the second mathematical expression, HARQ process IDs to be associated with the plurality of respective transmission occasions.

[Math. 3]

$$\text{HARQ Process ID} = \lfloor floor(\text{CURRENT\_symbol}/\text{inner periodicity})\rfloor \text{ modulo nrofHARQ-Processes} \quad \cdots \text{(C)}$$

Note that the second mathematical expression is not limited to mathematical expression C above. The second mathematical expression may include one or more terms related to a plurality of transmission occasions included in one period. The one or more terms may be related to at least one of (a1) to (a3). In a case where the second mathematical expression includes the term(s) related to at least one of (a1) to (a3), the terminal apparatus 10 can determine HARQ process IDs to be associated with a plurality of respective transmission occasions.

According to the above configuration, the terminal apparatus 10 can determine, by using the second information and the second mathematical expression, HARQ process IDs to be associated with a plurality of respective transmission occasions included in one period. Similarly, the base station apparatus 20 can determine, by using the second information and the second mathematical expression, HARQ process IDs to be associated with the plurality of respective transmission occasions included in one period.

(3) Third Aspect

In this aspect, a third mathematical expression, which is different from the second mathematical expression, is used. The third mathematical expression is a mathematical expression used in a case where one period includes a plurality of transmission occasions. The third mathematical expression includes a plurality of mathematical expressions used individually for the plurality of respective transmission occasions in one period. In this respect, the third mathematical expression is different from the second mathematical expression.

The configuration information may include third information indicating use of the third mathematical expression.

The third information may be information explicitly indicating use of the third mathematical expression or information implicitly indicating use of the third mathematical expression. An example of explicit information and an example of implicit information will be described below.

- Explicit Information

The third information may be "information indicating whether or not to use the third mathematical expression". The third information may indicate "use of the third mathematical expression" or "no use of the third mathematical expression". The third information may be a flag indicating "use of the third mathematical expression" or "no use of the third mathematical expression". The third information may indicate "use of the third mathematical expression" or "no use of the third mathematical expression" depending on whether or not the third information is present. For example, in a case where the third information is present, this may indicate use of the third mathematical expression. In a case where the third information is not present, this may indicate no use of the third mathematical expression. Note that "no use of the third mathematical expression" above may be interpreted as "use of a mathematical expression different from the third mathematical expression". For example, "no use of the third information" may be interpreted as "use of the first mathematical expression".

- Implicit Information

The third information may be information related to a plurality of transmission occasions included in one period. The third information may be information configured for each of a plurality of transmission occasions. For example, the third information may include one of, or a combination of two or more of the following (b1) to (b4).

　　　(b1) the number Nt of transmission occasions included in one period
　　　(b2) interval In between adjacent transmission occasions included in one period
　　　(b3) the number nrofHARQ-Processes_i of HARQ processes corresponding to a plurality of respective occasions
　　　(b4) offset value harq-ProcID-Offset_i for HARQ process IDs corresponding to a plurality of respective occasions

nrofHARQ-Processes_i includes a plurality of parameters corresponding to the plurality of respective occasions. Specifically, nrofHARQ-Processes_i may be a sequence indicating the number of HARQ processes to be used for a set of i-th transmission occasion included in each period. Note that nrofHARQ-Processes_i may be considered as the number of HARQ process IDs to be used for the set of i-th transmission occasion included in each period. In other words, the i-th entry in a sequence indicating the number of a plurality of HARQ processes may correspond to the i-th transmission occasion included in each period. Note that $1 \leq i \leq Nt$.

harq-ProcID-Offset_i includes a plurality of parameters corresponding to the plurality of respective occasions. Specifically, harq-ProcID-Offset_i may be a sequence indicating the offset value for the HARQ process ID of the i-th transmission occasion. Note that harq-ProcID_Offset_i may be considered as the offset value for the HARQ process ID to be used for the set of i-th transmission occasion included in each period. In other words, the i-th entry in a sequence indicating a plurality of offset values for HARQ processes may correspond to the i-th transmission occasion included in each period.

Upon receipt of at least one of (b1) to (b4) from the base station apparatus 20, the terminal apparatus 10 may determine that the base station apparatus 20 indicates use of the third mathematical expression. With no receipt of any of (b1) to (b4) from the base station apparatus 20, the terminal apparatus 10 may determine that the base station apparatus 20 indicates no use of the third mathematical expression.

The base station apparatus 20 may transmit an RRC message including the third information to the terminal apparatus 10 in step S901 in Fig. 9. The base station apparatus 20 may transmit an RRC message including the third information to the terminal apparatus 10 in step S1001 in Fig. 10. The third information may be configured as a new element of a ConfiguredGrantConfig IE. The third information may be configured in an IE other than a ConfiguredGrantConfig IE. The base station apparatus 20 may transmit system information (SI, for example, SIB1 and/or SIB other than SIB1) including the third information to the terminal apparatus 10. The base station apparatus 20 may transmit DCI including the third information to the terminal apparatus 10 in step S1002 in Fig. 10.

In a case where the third information indicates use of the third mathematical expression, the controller 110 of the terminal apparatus 10 may determine, by using the third mathematical expression, HARQ process IDs to be associated with the plurality of respective transmission occasions.

In a case where the third information indicates no use of the third mathematical expression, the controller 110 may use the first mathematical expression. In other words, the controller 110 may switch the mathematical expression to be used between the first mathematical expression and the third mathematical expression according to the third information.

For example, the third mathematical expression may be mathematical expression D below. The third mathematical expression includes a term related to (b3) and a term related to (b4). Note that CURRENT_symbol and periodicity are the same as those in the first mathematical expression (i.e., mathematical expression A).

[Math. 4]

$$\text{HARQ Process ID\_i} = [\text{floor(CURRENT\_symbol/periodicity)}] \text{ modulo nrofHARQ-Processes\_i} + \text{harq-ProcID-Offset\_i}$$

$$\cdots \text{(D)}$$

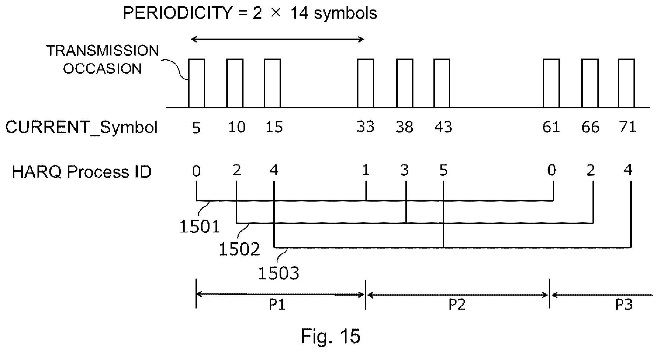

CG periodicity, the number Nt of transmission occasions, and an interval In of transmission occasions in Fig. 15 are the same as those in the example in Fig. 12. In the following, the set of first transmission occasion in each period is referred to as a "first transmission occasion set 1501". The first transmission occasion set 1501 includes the first transmission occasion in a first period P1, the first transmission occasion in a second period P2, and the first transmission occasion in a third period P3. A set of second transmission occasion in each period is referred to as a "second transmission occasion set 1502". The second transmission occasion set 1502 includes the second transmission occasion in the first period P1, the second transmission occasion in the second period P2, and the second transmission occasion in the third period P3. A set of third transmission occasion in each period is referred to as a "third transmission occasion set 1503". The third transmission occasion set 1503 includes the third transmission occasion in the first period P1, the third transmission occasion in the second period P2, and the third transmission occasion in the third period P3.

In this example, (b3) (i.e., nrofHARQ-Processes_i) corresponds to a sequence {2, 2, 2}. The first value (= 2) of the sequence indicates the number of HARQ processes to be used in the first transmission occasion set 1501. The second value (= 2) of the sequence indicates the number of HARQ processes to be used in the second transmission occasion set 1502. The third value (= 2) of the sequence indicates the number of HARQ processes to be used in the third transmission occasion set 1503.

In this example, (b4) (i.e., harq-ProcID-Offset_i) corresponds to a sequence {0, 2, 4}. The first value (= 0) of the sequence indicates the offset value for HARQ process IDs to be used in the first transmission occasion set 1501. Since the value is "0", the HARQ process IDs to be used in the first transmission occasion set 1501 are not offset. The second value (= 2) of the sequence indicates the offset value for HARQ process IDs to be used in the second transmission occasion set 1502. The HARQ process IDs of the second transmission occasion set 1502 are offset by "2" with respect to the HARQ process IDs of the first transmission occasion set 1501. The third value (= 4) of the sequence indicates the offset value for HARQ process IDs to be used in the third transmission occasion set 1503. The HARQ process IDs of the third transmission occasion set 1503 are offset by "4" with respect to the HARQ process IDs of the first transmission occasion set 1501.

The controller 110 applies mathematical expression D to sequence (b3) and sequence (b4) to thereby calculate three mathematical expressions D-1 to D-3 below.

[Math. 5]

$$\text{HARQ Process ID\_1} = [\text{floor(CURRENT\_symbol/periodicity)}] \text{ modulo 2}$$

$$\cdots \text{(D-1)}$$

$$\text{HARQ Process ID\_2} = [floor(\text{CURRENT\_symbol}/\text{periodicity})] \text{ modulo } 2 + 2$$
$$\cdots \text{(D-2)}$$

$$\text{HARQ Process ID\_3} = [floor(\text{CURRENT\_symbol}/\text{periodicity})] \text{ modulo } 2 + 4$$
$$\cdots \text{(D-3)}$$

Specifically, the controller 110 substitutes the first value of sequence (b3) and the first value of sequence (b4) in mathematical expression D. Consequently, the controller 110 can obtain mathematical expression D-1 for the first transmission occasion set 1501. As illustrated in Fig. 15, the controller 110 determines, by using mathematical expression D-1, HARQ process IDs to be associated with the plurality of respective transmission occasions included in the first transmission occasion set 1501.

The controller 110 substitutes the second value of sequence (b3) and the second value of sequence (b4) in mathematical expression D. Consequently, the controller 110 can obtain mathematical expression D-2 for the second transmission occasion set 1502. As illustrated in Fig. 15, the controller 110 determines, by using mathematical expression D-2, HARQ process IDs to be associated with the plurality of respective transmission occasions included in the second transmission occasion set 1502.

The controller 110 substitutes the third value of sequence (b3) and the third value of sequence (b4) in mathematical expression D. Consequently, the controller 110 can obtain mathematical expression D-3 for the third transmission occasion set 1503. As illustrated in Fig. 15, the controller 110 determines, by using mathematical expression D-3, HARQ process IDs to be associated with the plurality of respective transmission occasions included in the third transmission occasion set 1503.

Note that the third mathematical expression is not limited to mathematical expression D above. The third mathematical expression may include one or more terms related to a plurality of transmission occasions included in one period. The one or more terms may be related to at least one of (b1) to (b4). In a case where the third mathematical expression includes the term(s) related to at least one of (b1) to (b4), the terminal apparatus 10 can determine HARQ process IDs to be associated with a plurality of respective transmission occasions.

According to the above configuration, the terminal apparatus 10 can determine, by using the third information and the third mathematical expression, HARQ process IDs to be associated with a plurality of respective transmission occasions included in one period. Similarly, the base station apparatus 20 can determine, by using the third information and the third mathematical expression, HARQ process IDs to be associated with the plurality of respective transmission occasions included in one period.

(4) Fourth Aspect

The terminal apparatus 10 may determine HARQ process IDs to be associated with a plurality of respective transmission occasions included in one period such that the HARQ process IDs increase or decrease by a certain value Y.

Configuration information may include fourth information for determining HARQ process IDs to satisfy the above. The fourth information includes at least one of the certain value Y and the value of the HARQ process ID of the first transmission occasion in each period.

The base station apparatus 20 may transmit an RRC message including the fourth information to the terminal apparatus 10 in step S901 in Fig. 9. The base station apparatus 20 may transmit an RRC message including the fourth information to the terminal apparatus 10 in step S 1001 in Fig. 10. The fourth information may be configured as a new element of a ConfiguredGrantConfig IE. The fourth information may be configured in an IE other than a Configured-GrantConfig IE. The base station apparatus 20 may transmit system information (SI, for example, SIB1 and/or SIB other than SIB1) including the fourth information to the terminal apparatus 10. The base station apparatus 20 may transmit DCI including the fourth information to the terminal apparatus 10 in step S 1002 in Fig. 10.

The fourth information may be stored in the terminal apparatus 10 in advance. In this configuration, the controller 110 acquires the fourth information from the terminal apparatus 10 itself. In other words, the fourth information may be defined in a specification in advance. For example, the certain value Y may be a value defined in advance. Note that the controller 110 may calculate the value of the HARQ process ID of the first transmission occasion in each period. The controller 110 may calculate, by using the first mathematical expression, the value of the HARQ process ID of the first transmission occasion in each period.

The controller 110 determines, by using the fourth information, HARQ process IDs to be associated with the plurality of respective transmission occasions included in one period.

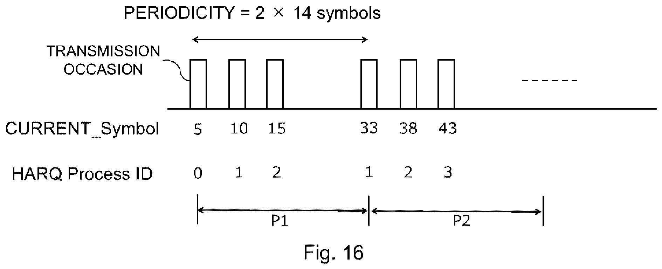

CG periodicity, the number Nt of transmission occasions, and an interval In between transmission occasions in Fig. 16 are the same as those in the example in Fig. 12. The communicator 120 receives the fourth information from the base station apparatus 20. The fourth information includes information indicating that an increment (corresponding to the certain value Y) is "1". The fourth information further includes information indicating that the HARQ process ID of the first transmission occasion in the first period P1 is "0" and the HARQ process ID of the first transmission occasion in the second period P2 is "1". The controller 110 determines, by using the fourth information, HARQ process IDs to be associated with the plurality of respective transmission occasions.

The controller 110 determines the HARQ process IDs of the respective transmission occasions such that the HARQ process IDs increase by 1 from "0" in the first period P1. Hence, as illustrated in Fig. 16, the HARQ process ID to be associated with the first transmission occasion in the first period P1 is "0". The HARQ process ID to be associated with the second transmission occasion in the first period P1 is "1". The HARQ process ID to be associated with the third transmission occasion in the first period P1 is "2".

The controller 110 determines the HARQ process IDs of the respective transmission occasions such that the HARQ process IDs increase by 1 from "1" in the second period P2. Hence, as illustrated in Fig. 16, the HARQ process ID to be associated with the first transmission occasion in the second period P2 is "1". The HARQ process ID to be associated with the second transmission occasion in the second period P2 is "2". The HARQ process ID to be associated with the third transmission occasion in the second period P2 is "3".

In another example, the controller 110 may determine, by using the configuration information, the value of the HARQ process ID of the first transmission occasion in each period. The communicator 120 may transmit the value of the HARQ process ID thus determined, to the base station apparatus 20 in the first transmission occasion in each period. For example, the controller 110 determines the HARQ process ID to be associated with the first transmission occasion in the first period P1, to be "0". The controller 110 transmits UCI including the HARQ process ID "0" to the base station apparatus 20 in the first transmission occasion in the first period P1. The controller 110 determines the HARQ process ID to be associated with the first transmission occasion in the second period P2, to be "1". The controller 110 transmits UCI including the HARQ process ID "1" to the base station apparatus 20 in the first transmission occasion in the second period P2. The base station apparatus 20 determines HARQ process IDs to be associated with a plurality of respective transmission occasions included in one period such that the HARQ process ID received in the first transmission occasion in each period increase or decrease by the certain value Y.

According to the above configurations, the terminal apparatus 10 can determine, by using the fourth information, HARQ process IDs to be associated with a plurality of respective transmission occasions included in one period. Similarly, the base station apparatus 20 can determine, by using the fourth information, HARQ process IDs to be associated with the plurality of respective transmission occasions included in one period.

The first to fourth aspects further exert the following advantageous effects. Assume that, in a case where a plurality of transmission occasions are configured in one period, the terminal apparatus 10 calculates HARQ process IDs by using the first mathematical expression described above. In this case, the terminal apparatus 10 calculates one value collectively for the plurality of transmission occasions included in the one period. The terminal apparatus 10 cannot individually determine HARQ process IDs for the plurality of transmission occasions included in the one period. In contrast to this, according to the first to fourth aspects, the terminal apparatus 10 can individually determine HARQ process IDs for a plurality of respective transmission occasions included in one period.

- Alteration 1-1

In the first to fourth aspects above, the configurations in which the HARQ process IDs of a plurality of respective transmission occasions included in one period are different from each other have been described. However, the configurations are not restrictive. The HARQ process IDs of a plurality of transmission occasions included in one period may be the same.

However, in a case where the interval In between transmission occasions is small, the next HARQ process may be initiated before a given HARQ process is completed. In a case where the HARQ process IDs of two adjacent transmission occasions are the same in such a situation, there is a possibility that the terminal apparatus 10 and/or the base station apparatus 20 cannot appropriately process corresponding HARQ processes. A configuration in which the HARQ process IDs of a plurality of respective transmission occasions included in one period are different from each other can prevent occurrence of such an issue. Note that, to prevent the issue, the HARQ process IDs of at least two adjacent transmission occasions included in one period may be different from each other.

- Alteration 1-2

For one or more serving cells or one or more UL-BWPs, a plurality of CGs may be configured for the terminal apparatus 10. The first to fourth aspects above may be applied to the terminal apparatus 10 configured with a plurality of CGs.

2. Second Embodiment

Next, a configuration of a second embodiment will be described. In the following, only parts different from those in the first embodiment will be described, and description of parts same as those in the first embodiment will be omitted. Hence, unless there is any mutual inconsistency, the configuration of the first embodiment and alterations thereof can be applied to the configuration to be described in this embodiment.

The terminal apparatus 10 determines HARQ process IDs to be associated with a plurality of respective transmission occasions included in one period. The terminal apparatus 10 transmits the HARQ process IDs thus determined to the base station apparatus 20.

(1) First Aspect

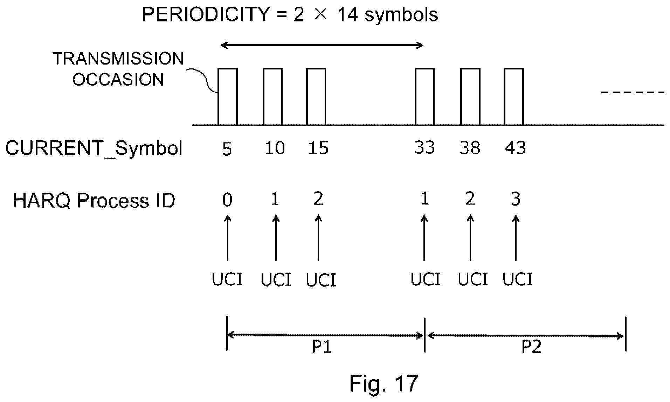

CG periodicity, the number Nt of transmission occasions, and an interval In between transmission occasions in Fig. 17 are the same as those in the example in Fig. 12.

The controller 110 of the terminal apparatus 10 determines HARQ process IDs to be associated with a plurality of respective transmission occasions included in the first period P1. Assume that the HARQ process ID for the first transmission occasion is "0", the HARQ process ID for the second transmission occasion is "1", and the HARQ process ID for the third transmission occasion is "2". The communicator 120 may transmit UCI including the HARQ process IDs to the base station apparatus 20 for each of the plurality of transmission occasions included in the first period P1. As illustrated in Fig. 17, the communicator 120 transmits UCI including the HARQ process ID "0" to the base station apparatus 20 in the first transmission occasion in the first period P1. The communicator 120 transmits UCI including the HARQ process ID "1" to the base station apparatus 20 in the second transmission occasion in the first period P1. The communicator 120 transmits UCI including the HARQ process ID "2" to the base station apparatus 20 in the third transmission occasion in the first period P1.

Similarly, the controller 110 determines HARQ process IDs to be associated with a plurality of respective transmission occasions included in the second period P2. As illustrated in Fig. 17, the communicator 120 transmits UCI including the HARQ process IDs to the base station apparatus 20 for each of the plurality of transmission occasions included in the second period P2.

(2) Second Aspect

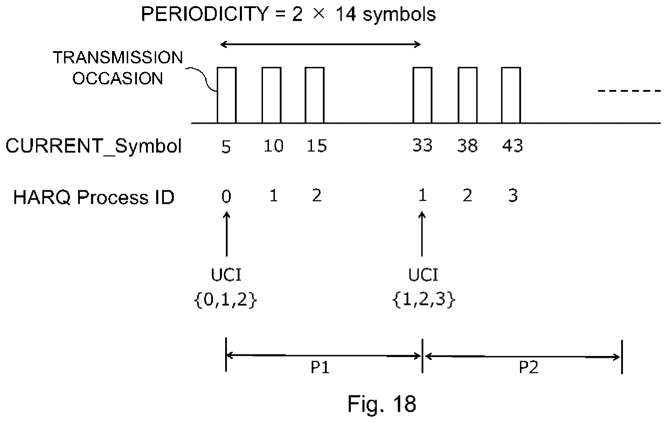

CG periodicity, the number Nt of transmission occasions, and an interval In between transmission occasions in Fig. 18 are the same as those in the example in Fig. 12.

The controller 110 determines HARQ process IDs to be associated with the plurality of respective transmission occasions included in the first period P1. The HARQ process IDs of the plurality of transmission occasions included in the first period P1 are the same as those in the example in Fig. 17. The controller 110 generates the first sequence {0, 1, 2} indicating the HARQ process IDs of the plurality of transmission occasions included in the first period P1. As illustrated in Fig. 18, the communicator 120 transmits UCI including the first sequence to the base station apparatus 20 in the first transmission occasion in the first period P1.

The controller 110 determines HARQ process IDs to be associated with the plurality of respective transmission occasions included in the second period P2. The HARQ process IDs of the plurality of transmission occasions included in the second period P2 are the same as those in the example in Fig. 17. The controller 110 generates the second sequence {1, 2, 3} indicating the HARQ process IDs of the plurality of transmission occasions included in the second period P2. As illustrated in Fig. 18, the communicator 120 transmits UCI including the second sequence to the base station apparatus 20 in the first transmission occasion in the second period P2.

The controller 110 may determine the number of bits of the UCI, based on the number Nt of transmission occasions. In other words, the controller 110 may determine, based on the number Nt of transmission occasions, the bit width of a field indicating the HARQ process IDs associated with the plurality of respective transmission occasions included in the UCI. For example, in a case where the number Nt of transmission occasions is three (Nt = 3) as described above, the number of bits of the UCI may be 3 bits. The controller 110 may determine the number of bits of the UCI, based on the number of transmission occasions to be actually used of the number Nt of transmission occasions. The number of transmission occasions to be actually used corresponds to the number obtained by removing an "unused transmission occasion(s)" to be described below from the number Nt of transmission occasions. In another example, the number of bits of UCI may be defined in advance.

The terminal apparatus 10 may receive information indicating transmission of UCI including HARQ process IDs as described above, from the base station apparatus 20. In the following, the information will be referred to as "first transmission indication information". The terminal apparatus 10 may transmit UCI including HARQ process IDs according to the first transmission indication information.

The first transmission indication information may be information explicitly indicating transmission of UCI including HARQ process IDs or information implicitly indicating transmission of UCI including HARQ process IDs. An example of explicit information and an example of implicit information will be described below.

- Explicit Information

The first transmission indication information may be "information indicating whether or not to transmit UCI including HARQ process IDs". The first transmission indication information may indicate "transmission of UCI including HARQ process IDs" or "no transmission of UCI including HARQ process IDs". The first transmission indication information may be a flag indicating "transmission of UCI including HARQ process IDs" or "no transmission of UCI including HARQ process IDs". The first transmission indication information may indicate "transmission of UCI including HARQ process IDs" or "no transmission of UCI including HARQ process IDs" depending on whether or not the first transmission indication information is present. For example, in a case where the first transmission indication information is present, this may indicate transmission of UCI including HARQ process IDs. In a case where no first transmission indication information is present, this may indicate no transmission of UCI including HARQ process IDs.

- Implicit Information

The first transmission indication information may be information related to a plurality of transmission occasions included in one period. For example, the first transmission indication information may include one of, or a combination of two of the following (c1) and (c2).

(c1) the number Nt of transmission occasions included in one period
(c2) interval In between adjacent transmission occasions included in one period

The base station apparatus 20 may transmit an RRC message including the first transmission indication information to the terminal apparatus 10 in step S901 in Fig. 9. The base station apparatus 20 may transmit an RRC message including the first transmission indication information to the terminal apparatus 10 in step S1001 in Fig. 10. The first transmission indication information may be configured as a new element of a ConfiguredGrantConfig IE. The first transmission indication information may be configured in an IE other than a ConfiguredGrantConfig IE. The base station apparatus 20 may transmit system information (SI, for example, SIB1 and/or SIB other than SIB1) including the first transmission indication information to the terminal apparatus 10. The base station apparatus 20 may transmit DCI including the first transmission indication information to the terminal apparatus 10 in step S1002 in Fig. 10.

According to the configuration, the terminal apparatus 10 individually determines HARQ process IDs for a plurality of respective transmission occasions included in one period. The terminal apparatus 10 further transmits UCI including the HARQ process IDs to the base station apparatus 20. In this way, the terminal apparatus 10 can notify the base station apparatus 20 of the HARQ process IDs associated with the plurality of respective transmission occasions included in the one period.

- Alteration 2-1

In the first and second aspects above, the configurations in which the HARQ process IDs of a plurality of respective transmission occasions included in one period are different from each other have been described. However, the configurations are not restrictive. The HARQ process IDs of a plurality of transmission occasions included in one period may be the same.

- Alteration 2-2

For one or more serving cells or one or more UL-BWPs, a plurality of CGs may be configured for the terminal apparatus 10. The first and second aspects above may be applied to the terminal apparatus 10 configured with a plurality of CGs. In such a configuration, the terminal apparatus 10 may determine HARQ process IDs as follows. Assume that first CG and second CG are configured. The terminal apparatus 10 may determine HARQ process IDs such that the HARQ process IDs to be used in the first CG and the HARQ process IDs to be used in the second CG do not overlap.

In another example, DG may be configured in addition to CG. In this configuration, the terminal apparatus 10 may determine HARQ process IDs such that the HARQ process IDs to be used in CG and the HARQ process IDs to be used in DG do not overlap.

3. Third Embodiment

Next, a configuration of a third embodiment will be described. Unless there is any mutual inconsistency, the configuration to be described in this embodiment can be applied to the configurations of the first embodiment and the second embodiment and alterations thereof.

The terminal apparatus 10 need not use at least one of a plurality of transmission occasions included in one period, for uplink transmission. Such a transmission occasion not used will be referred to as an "unused occasion or unused transmission occasion" below.

The terminal apparatus 10 may dynamically indicate an unused transmission occasion(s) to the base station apparatus 20. Such indication will be referred to as "dynamic indication of an unused occasion" below.

The base station apparatus 20 may transmit information indicating whether or not dynamic indication of an unused occasion(s) is enabled to the terminal apparatus 10. In the following, the information will be referred to as "second transmission indication information". The terminal apparatus 10 may transmit UCI including dynamic indication of an unused occasion(s) to the base station apparatus 20 according to the second transmission indication information.

The second transmission indication information may be "information indicating whether or not dynamic indication of an unused occasion(s) is enabled". The second transmission indication information may indicate that "dynamic indication of an unused occasion(s) is enabled" or "dynamic indication of an unused occasion(s) is disabled". The second transmission indication information may be a flag indicating that "dynamic indication of an unused occasion(s) is enabled" or "dynamic indication of an unused occasion(s) is disabled". The second transmission indication information may indicate that "dynamic indication of an unused occasion(s) is enabled" or "dynamic indication of an unused occasion(s) is disabled" depending on whether or not the second transmission indication information is present. For example, in a case where the second transmission indication information is present, this may indicate that "dynamic indication of an unused occasion(s) is enabled". In a case where no second transmission indication information is present, this may indicate that dynamic indication of an unused occasion(s) is disabled.

The base station apparatus 20 may transmit an RRC message including the second transmission indication information to the terminal apparatus 10 in step S901 in Fig. 9. The base station apparatus 20 may transmit an RRC message including the second transmission indication information to the terminal apparatus 10 in step S1001 in Fig. 10. The second transmission indication information may be configured as a new element of a ConfiguredGrantConfig IE. The second transmission indication information may be configured in an IE other than a ConfiguredGrantConfig IE. The base station apparatus 20 may transmit system information (SI, for example, SIB1 and/or SIB other than SIB1) including the second transmission indication information to the terminal apparatus 10. The base station apparatus 20 may transmit DCI including the second transmission indication information to the terminal apparatus 10 in step S1002 in Fig. 10.

(1) First Aspect

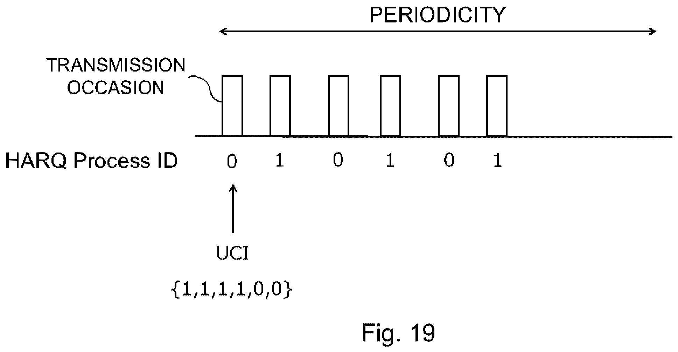

The second transmission indication information may indicate whether or not dynamic indication of an unused occasion(s) is enabled, for each of all the transmission occasions included in one period. In the example in Fig. 19, the number Nt of transmission occasions is six (Nt = 6). Assume that the second transmission indication information indicates that dynamic indication of an unused occasion(s) is enabled.

In this configuration, the terminal apparatus 10 may transmit UCI including information indicating whether each of the transmission occasions is used, to the base station apparatus 20. Here, the information may be expressed as a sequence. The information may be expressed as a bit string (for example, a bitmap). In other words, a sequence may be interpreted as a bit string. For example, information may be expressed as a bit string, and the bits of the bit string may correspond to a plurality of respective transmission occasions, to be used as dynamic indication of an unused occasion(s). The controller 110 determines to use the first transmission occasion to the fourth transmission occasion, for uplink transmission. The controller 110 determines not to use the fifth transmission occasion and the sixth transmission occasion, for uplink transmission. In this case, the controller 110 generates a sequence {1, 1, 1, 1, 0, 0}. The first to sixth values of the sequence correspond to the first to sixth transmission occasions, respectively. A value "1" indicates use of a corresponding transmission occasion for uplink transmission. A value "0" indicates no use of a corresponding transmission occasion for uplink transmission. The communicator 120 transmits UCI including the sequence to the base station apparatus 20 in the first transmission occasion. Note that the UCI may be CG-UCI or may be UCI other than CG-UCI. Here, a value indicating use of a transmission occasion for uplink transmission may be interpreted as a value indicating the transmission occasion may be used for uplink transmission, a value indicating that the transmission occasion may be used by the terminal apparatus 10, and/or a value indicating that the transmission occasion is a valid uplink resource. A value indicating no use of transmission occasion for uplink transmission may be interpreted as a value indicating that the transmission occasion need not be used for uplink transmission, a value indicating that the transmission occasion need not be used by the terminal apparatus 10, and/or a value indicating that the transmission occasion is an invalid (i.e., not valid) uplink resource. In the example, a value "0" corresponds to a value indicating no use of a transmission occasion for uplink transmission, and a value "1" corresponds to a value indicating use of a transmission occasion for uplink transmission. However, this example is not restrictive. A value "1" may correspond to a value indicating no use of a transmission occasion for uplink transmission, and a value "0" may correspond to a value indicating use of a transmission occasion for uplink transmission.

In another example, the controller 110 may transmit UCI including a value indicating the number of transmission occasions to be used, to the base station apparatus 20. In the example in Fig. 19, the value may be "4". The value "4" indicates use of the first transmission occasion to the fourth transmission occasion among six transmission occasions for uplink transmission.

Assume that the second transmission indication information indicates that dynamic indication of an unused occasion(s) is disabled. In this case, the controller 110 may use all the transmission occasions included in one period, for uplink transmission.

(2) Second Aspect

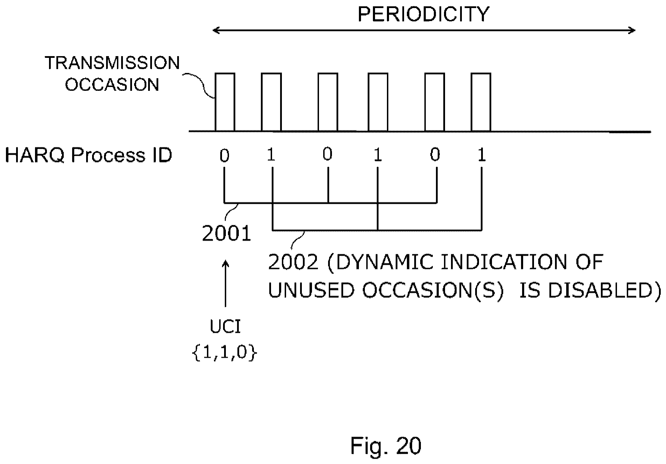

The second transmission indication information may indicate whether or not dynamic indication of an unused occasion(s) is enabled, for each HARQ process ID. In the example in Fig. 20, the number Nt of transmission occasions is six (Nt = 6). Further, the number of HARQ processes (i.e., nrofHARQ-Processes) is "2". As an HARQ process ID, two values "0" and "1" are used.

The HARQ process ID for the first transmission occasion, the HARQ process ID for the third transmission occasion, and the HARQ process ID for the fifth transmission occasion are each "0". In the following, a set of transmission occasions with an HARQ process ID of "0" will be referred to as a "first transmission occasion set 2001".

The HARQ process ID for the second transmission occasion, the HARQ process ID for the fourth transmission occasion, and the HARQ process ID for the sixth transmission occasion are each "1". In the following, a set of transmission occasions with an HARQ process ID of "1" will be referred to as a "second transmission occasion set 2002".

The second transmission indication information may indicate whether or not dynamic indication of an unused occasion(s) is enabled, for each transmission occasion set. For example, the second transmission indication information may be information based on the number of HARQ processes (i.e., nrofHARQ-Processes) to be used in CG. The second transmission indication information may be a sequence having the number of bits corresponding to the number of HARQ processes. In the example in Fig. 20, the number of HARQ processes is "2", and hence the second transmission indication information is a 2-bit sequence. For example, the second transmission indication information is a sequence {1, 0}. The first value of the sequence is a value corresponding to the first transmission occasion set 2001. The value "1" indicates that dynamic indication of an unused occasion(s) is enabled in the first transmission occasion set 2001. The second value of the sequence is a value corresponding to the second transmission occasion set 2002. The value "0" indicates that dynamic indication of an unused occasion(s) is disabled in the second transmission occasion set 2002.

The controller 110 determines whether each of the transmission occasions included in the first transmission occasion set 2001 is to be used. The controller 110 determines to use the first transmission occasion and the third transmission occasion, for uplink transmission. The controller 110 determines not to use the fifth transmission occasion for uplink transmission. In this case, the controller 110 generates a sequence {1, 1, 0}. The first value of the sequence corresponds to the first transmission occasion. The second value of the sequence corresponds to the third transmission occasion. The third value of the sequence corresponds to the fifth transmission occasion. A value "1" indicates use of a corresponding transmission occasion for uplink transmission. A value "0" indicates no use of a corresponding transmission occasion for uplink transmission. The communicator 120 transmits UCI including the sequence to the base station apparatus 20 in the earliest transmission occasion (i.e., the first transmission occasion) in the first transmission occasion set 2001. Note that the UCI may be CG-UCI or may be UCI other than CG-UCI. Here, a value indicating use of a transmission occasion for uplink transmission may be interpreted as a value indicating the transmission occasion may be used for uplink transmission, a value indicating that the transmission occasion may be used by the terminal apparatus 10, and/or a value indicating that the transmission occasion is a valid uplink resource. A value indicating no use of transmission occasion for uplink transmission may be interpreted as a value indicating that the transmission occasion need not be used for uplink transmission, a value indicating that the transmission occasion need not be used by the terminal apparatus 10, and/or a value indicating that the transmission occasion is an invalid (i.e., not valid) uplink resource. In the example, a value "0" corresponds to a value indicating no use of a transmission occasion for uplink transmission, and a value "1" corresponds to a value indicating use of a transmission occasion for uplink transmission. However, this example is not restrictive. A value "1" may correspond to a value indicating no use of a transmission occasion for uplink transmission, and a value "0" may correspond to a value indicating use of a transmission occasion for uplink transmission.

In another example, the controller 110 may transmit UCI including a value indicating the number of transmission occasions to be used, to the base station apparatus 20. In the example in Fig. 20, the value may be "2". The value "2" indicates use of the first transmission occasion and the third transmission in the first transmission occasion set 2001 for uplink transmission.

In this example, dynamic indication of an unused occasion(s) is disabled in the second transmission occasion set 2002. In this case, the controller 110 may use all the transmission occasions included in the second transmission occasion set 2002, for uplink transmission.

With this configuration, the terminal apparatus 10 can dynamically indicate an unused occasion(s) to the base station apparatus 20. In a case where the base station apparatus 20 has received dynamic indication of an unused occasion(s) from the terminal apparatus 10, the base station apparatus 20 can allocate the unused occasion(s) to a terminal apparatus other than the terminal apparatus 10. With this configuration, the base station apparatus 20 can efficiently allocate radio resources to a plurality of terminal apparatuses.

- Alteration 3-1

The controller 110 may determine the size (i.e., the number of bits or the bit width) of information corresponding to the dynamic indication, based on configuration information. For example, the controller 110 may determine the number of bits of a field corresponding to the dynamic indication included in UCI, based on the configuration information.

For example, in a case where the configuration information includes first information, the size of the information corresponding to the dynamic indication may be determined based on the number of HARQ process IDs indicated by the first information. For example, in a case where the first information is a sequence {0, 1, 2} as in the example in Fig. 13, the size of the information corresponding to the dynamic indication may be 3 bits.

In a case where the configuration information includes third information, the size of the information corresponding to the dynamic indication may be determined based on at least one piece of information included in the third information. Specifically, the number of bits of the information corresponding to the dynamic indication may be determined based on the number of parameters included in at least one piece of information included in the third information. For example, the size of the information corresponding to the dynamic indication may be determined based on nrofHARQ-Processes_i. Specifically, the number of bits of the information corresponding to the dynamic indication may be determined based on the number of parameters included in nrofHARQ-Processes_i. For example, in a case where the number of parameters included in nrofHARQ-Processes_i is three as in the example in Fig. 15, the size of the information corresponding to the dynamic indication may be 3 bits.

The size of the information corresponding to the dynamic indication may be determined based on harq-ProcID-Offset_i. Specifically, the size of the information corresponding to the dynamic indication may be determined based on the number of parameters included in harq-ProcID-Offset_i. In a case where the number of parameters included in harq-ProcID-Offset_i is three as in the example in Fig. 15, the size of the information corresponding to the dynamic indication may be 3 bits.

In the second aspect, the size of the information corresponding to the dynamic indication may be determined based on the number of transmission occasions included in the first transmission occasion set 2001. The size of the information corresponding to the dynamic indication may be determined based on the number of transmission occasions included in the second transmission occasion set 2002.

4. Fourth Embodiment

Next, a configuration of a fourth embodiment will be described. Unless there is any mutual inconsistency, two or more aspects or elements described in the first embodiment, the second embodiment, and the third embodiment can be combined. In this embodiment, a combination of part of the second aspect of the first embodiment (for example, selection of a mathematical expression(s)) and part of the fourth aspect of the first embodiment (for example, an increment by the certain value Y) will be described.

In a case where a plurality of transmission occasions are configured in one period in CG by configuration information, the controller 110 determines, by using a plurality of mathematical expressions, HARQ process IDs to be associated with the plurality of respective transmission occasions included in one period.

The configuration information may include fifth information for determining HARQ process IDs. For example, the fifth information may include a parameter related to the plurality of mathematical expressions. The controller 110 may determine, by applying the fifth information to the plurality of mathematical expressions, HARQ process IDs to be associated with the plurality of respective transmission occasions included in one period.

The plurality of mathematical expressions may include mathematical expression Eq1 to be applied to the first valid or configured occasion of the plurality of transmission occasions included in the one period and mathematical expression Eq2 to be applied to an occasion (N-th (N > 1) transmission occasion) other than the first occasion of the plurality of transmission occasions. Here, the first transmission occasion may include the first uplink transmission. The transmission occasion other than the first transmission occasion may include uplink transmission other than the first uplink transmission.

The controller 110 may select mathematical expression Eq1 and mathematical expression Eq2 by using a certain parameter. For example, the certain parameter may be harq-ProcID-Offset2. harq-ProcID-Offset2 is a parameter used in a case where a plurality of CGs are configured as described above. harq-ProcID-Offset2 may also be used in a case where a plurality of transmission occasions are configured in one period in CG. Hence, in a case where a plurality of transmission occasions are configured in one period by configuration information, the controller 110 may select mathematical expression Eq1 and mathematical expression Eq2, based on whether or not harq-ProcID-Offset2 is included in the configuration information.

For example, in a case where a plurality of transmission occasions are configured in one period by using configuration information, and harq-ProcID-Offset2 is not included in the configuration information, the controller 110 may select mathematical expression Eq1 and mathematical expression Eq2 as follows. In other words, in a case where a plurality of transmission occasions are configured in one period by configuration information, the controller 110 may select mathematical expression Eq1 and mathematical expression Eq2 as follows. In a case where harq-ProcID-Offset2 is not included in the configuration information, the controller 110 may select mathematical expression Eq1 and mathematical expression Eq2 as follows.

The controller 110 may select mathematical expression E-1 below as mathematical expression Eq1.

[Math. 6]

$$\text{HARQ Process ID} = [\text{floor}(X*(\text{CURRENT\_symbol} - \text{offset1}) \,/\, periodicity) + \text{offset2}] \text{ modulo } nrofHARQ\text{-}Processes$$

$$\cdot \cdot \cdot (\text{E-1})$$

Mathematical expression E-1 is a mathematical expression obtained by adding X, offset1, and offset2 to mathematical expression A. X may be 1. X may be the number Nt of transmission occasions. offset1 may be zero. offset1 may be a value other than zero. offset2 may be zero. offset2 may be a value other than zero.

Note that, in mathematical expression E-1, at least one of X, offset1, and offset2 may be omitted. The controller 110 may select mathematical expression E-1a below, instead of mathematical expression E-1, as mathematical expression Eq1.

[Math. 7]

$$\text{HARQ Process ID} = [X*\text{floor}(\,(\text{CURRENT\_symbol} - \text{offset1}) \,/\, periodicity) + \text{offset2}] \text{ modulo } nrofHARQ\text{-}Processes$$

$$\cdot \cdot \cdot (\text{E-1a})$$

The controller 110 may select mathematical expression E-2 as mathematical expression Eq2.

[Math. 8]

$$\text{HARQ Process ID} = (\text{Preceding HARQ Process ID} + Y\,) \text{ modulo } nrofHARQ\text{-}Processes$$

$$\cdot \cdot \cdot (\text{E-2})$$

In mathematical expression E-2, Preceding HARQ Process ID denotes the HARQ process ID associated with a previous transmission occasion in a period. In other words, the HARQ process ID associated with the (i + 1)-th transmission occasion included in each period may be determined based on the HARQ process ID associated with the i-th transmission occasion. Y may be the same as the certain value Y described in the fourth aspect of the first embodiment. Hence, mathematical expression E-2 is a mathematical expression to find a value obtained by incrementing an HARQ process ID by the certain value Y and perform modulo operation on the value by nrofHARQ-Processes (i.e., the number of HARQ processes).

In contrast to the above, in a case where a plurality of transmission occasions are configured in one period by using configuration information, and harq-ProcID-Offset2 is included in the configuration information, the controller 110 may select mathematical expression Eq1 and mathematical expression Eq2 as follows. In other words, in a case where a plurality of transmission occasions are configured in one period by configuration information, the controller 110 may select mathematical expression Eq1 and mathematical expression Eq2 as follows. In a case where harq-ProcID-Offset2 is included in the configuration information, the controller 110 may select mathematical expression Eq1 and mathematical expression Eq2 as follows.

The controller 110 may select mathematical expression F-1 as mathematical expression Eq1.
[Math. 9]

$$\text{HARQ Process ID} = [floor(X*(CURRENT\_symbol - offset1) \,/\, periodicity) + offset2] \text{ modulo } nrofHARQ\text{-}Processes + harq\text{-}ProcID\text{-}Offset2 \quad\quad \cdot\;\cdot\;\cdot\;(F\text{-}1)$$

Mathematical expression F-1 is a mathematical expression obtained by adding X, offset1, and offset2 to mathematical expression B. The values of X, offset1, and offset2 may be similar to the values described above.
Note that, in mathematical expression F-1, at least one of X, offset1, and offset2 may be omitted. The controller 110 may select mathematical expression F-1a below, instead of mathematical expression F-1, as mathematical expression Eq1.
[Math. 10]

$$\text{HARQ Process ID} = [X*floor((CURRENT\_symbol - offset1) \,/\, periodicity) + offset2] \text{ modulo } nrofHARQ\text{-}Processes + harq\text{-}ProcID\text{-}Offset2 \quad\quad \cdot\;\cdot\;\cdot\;(F\text{-}1a)$$

In this case, mathematical expression Eq2 may include one or more mathematical expressions. For example, the controller 110 may select mathematical expression F-2 below as mathematical expression Eq2.
[Math. 11]

$$\text{HARQ Process ID} = (Preceding \; HARQ \; Process \; ID + Y) \text{ modulo } (nrofHARQ\text{-}Processes + harq\text{-}ProcID\text{-}Offset2) + harq\text{-}ProcID\text{-}Offset2 \quad\quad \cdot\;\cdot\;\cdot\;(F\text{-}2)$$

Similarly to the above description, Preceding HARQ Process ID denotes the HARQ process ID associated with a previous transmission occasion in a period. In other words, the HARQ process ID associated with the (i + 1)-th transmission occasion included in each period may be determined based on the HARQ process ID associated with the i-th transmission occasion. Y may be the same as the certain value Y described in the fourth aspect of the first embodiment.

Mathematical expression F-2 includes modulo operation for the first value obtained by increasing (or incrementing) the HARQ process ID by the value Y and addition operation of the second value for a value obtained by the modulo operation. In this example, the second value is harq-ProcID-Offset2. The modulo operation includes modulo operation of the first value by a value obtained by adding the number of HARQ processes and the second value together (i.e., nrofHARQ-Processes + harq-ProcID-Offset2). In the following, the "value obtained by adding the number of HARQ processes and the second value together" used for the modulo operation will be referred to as a "third value" in some cases. Note that mathematical expression F-2 above is an example of mathematical expression Eq2 but may be a mathematical expression other than mathematical expression Eq2 as long as including the modulo operation and the addition operation.

The controller 110 may select any of mathematical expressions (d1) to (d3) below as mathematical expression Eq2, in addition to mathematical expression F-2.

(d1) mathematical expression including modulo operation for the first value and not including addition operation of the second value
(d2) mathematical expression not including modulo operation for the first value and including addition operation of the second value
(d3) mathematical expression not including modulo operation for the first value and not including addition operation of the second value

For example, the controller 110 may select mathematical expression F-3 as mathematical expression Eq2. Mathematical expression F-3 is an example of mathematical expression (d1).
[Math. 12]

$$\text{HARQ Process ID} = (\text{Preceding HARQ Process ID} + Y)\ \text{modulo}$$
$$(nrofHARQ\text{-}Processes + harq\text{-}ProcID\text{-}Offset2)$$

$$\cdots (F\text{-}3)$$

In a case where the controller 110 uses a plurality of mathematical expressions as Eq2, the controller 110 may select one mathematical expression from the plurality of mathematical expressions, based on a certain condition.

For example, in a case where the first value is equal to or greater than the third value (i.e., nrofHARQ-Processes + harq-ProcID-Offset2), the controller 110 may determine an HARQ process ID by using mathematical expression F-2. In a case where the first value is smaller than the third value, the controller 110 may determine an HARQ process ID by using any of mathematical expressions (d1) to (d3). For example, in a case where the first value is smaller than the third value, the controller 110 may determine an HARQ process ID by using mathematical expression F-3.

As described above, the configuration information may include fifth information for determining HARQ process IDs. The fifth information may include at least one parameter to be used for mathematical expression Eq1 and mathematical expression Eq2. For example, the fifth information may include at least one of X, offset1, and offset2. The fifth information may include the number Nt of transmission occasions as X. The fifth information may include the certain value Y.

The base station apparatus 20 may transmit an RRC message including the fifth information to the terminal apparatus 10 in step S901 in Fig. 9. The base station apparatus 20 may transmit an RRC message including the fifth information to the terminal apparatus 10 in step S 1001 in Fig. 10. The fifth information may be configured as a new element of a ConfiguredGrantConfig IE. The fifth information may be configured in an IE other than a ConfiguredGrantConfig IE. The base station apparatus 20 may transmit system information (SI, for example, SIB1 and/or SIB other than SIB1) including the fifth information to the terminal apparatus 10. The base station apparatus 20 may transmit DCI including the fifth information to the terminal apparatus 10 in step S1002 in Fig. 10.

Note that the base station apparatus 20 may determine HARQ process IDs to be associated with the plurality of respective transmission occasions, in a manner similar to the above. The base station apparatus 20 receives uplink transmission corresponding to an HARQ process from the terminal apparatus 10.

According to the above configurations, the terminal apparatus 10 can appropriately determine HARQ process IDs to be associated with a plurality of respective transmission occasions included in one period.

For example, assume that the terminal apparatus 10 determines HARQ process IDs by using the following configuration.

```
the number Nt of transmission occasions = 5
nrofHARQ-Processes = 8
harq-ProcID-Offset2 = 3
X=5
Y = 1
offset1 = 0
offset2 = 0
```

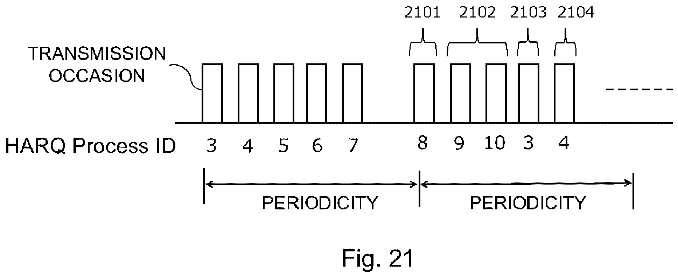

As illustrated in Fig. 21, a transmission occasion denoted by a reference numeral 2101 is the first transmission in one period, the terminal apparatus 10 determines an HARQ process ID for the transmission occasion denoted by the reference numeral 2101, by using mathematical expression F-1.

For two transmission occasions denoted by a reference numeral 2102, the first value is smaller than the third value (i.e., nrofHARQ-Processes + harq-ProcID-Offset2). Hence, the terminal apparatus 10 determines HARQ process IDs for the two transmission occasions denoted by the reference numeral 2102, by using mathematical expression F-3.

For a transmission occasion denoted by a reference numeral 2103, the first value is equal to or greater than the third value. Hence, the terminal apparatus 10 determines an HARQ process ID for the transmission occasion denoted by the reference numeral 2103, by using mathematical expression F-2. Consequently, for a transmission occasion denoted by a reference numeral 2104, the first value is smaller than the third value. Hence, the terminal apparatus 10 determines an HARQ process ID for the transmission occasion denoted by the reference numeral 2104, by using mathematical expression F-3.

Since harq-ProcID-Offset2 = 3 and nrofHARQ-Processes = 8 in the configuration, it is considered that use of HARQ process IDs 3 to 10 is intended. As illustrated in Fig. 21, the terminal apparatus 10 can assign the HARQ process IDs 3 to 10 to a plurality of transmission occasions. For example, in a case where a different mathematical expression (i.e., a mathematical expression different from mathematical expression F-2) is used for the transmission occasion indicated by the reference numeral 2103, there is a possibility that an HARQ process ID other than 3 to 10 is assigned. For example, in a case where a plurality of CGs are configured, inconvenience that an HARQ process ID other than 3 to 10 cannot be used in another CG may occur. In the configuration, the terminal apparatus 10 uses mathematical expression F-2 for the transmission occasion denoted by the reference numeral 2103. In mathematical expression F-2, the second value (i.e., harq-ProcID-Offset2) is added to a value after modulo operation. Such addition operation can prevent an HARQ process ID other than 3 to 10 from being calculated. As described above, the terminal apparatus 10 can assign intended HARQ process IDs (i.e., 3 to 10) to a plurality of transmission occasions.

5. Alteration

Although the present disclosure has been described in accordance with the embodiments, it is understood that the present disclosure is not limited to the embodiments and structures. The present disclosure also includes various alterations and variations within the scope of equivalents. Other combinations including one or more elements included in the embodiments are also included in the scope and spirit of the present disclosure.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

6. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note 1)

A terminal apparatus (10) including:

a controller (110) configured to determine, by using configuration information related to a plurality of transmission occasions included in one period in configured grant (CG), hybrid automatic repeat request (HARQ) process identifiers to be associated with the plurality of respective transmission occasions; and
a communicator (120) configured to perform uplink transmissions corresponding to the HARQ processes.

(Supplementary Note 2)

The terminal apparatus according to supplementary note 1, wherein the communicator is configured to receive the configuration information from a base station apparatus (20).

(Supplementary Note 3)

The terminal apparatus according to supplementary note 2, wherein the configuration information includes information indicating the process identifiers of the plurality of respective transmission occasions.

(Supplementary Note 4)

The terminal apparatus according to supplementary note 2, wherein

the configuration information is information indicating use of a mathematical expression for the plurality of transmission occasions, and
the controller is configured to determine, by using the mathematical expression, the process identifiers to be associated with the plurality of respective transmission occasions.

(Supplementary Note 5)

The terminal apparatus according to supplementary note 4, wherein the mathematical expression is a mathematical expression used commonly for the plurality of transmission occasions.

(Supplementary Note 6)

The terminal apparatus according to supplementary note 5, wherein

the mathematical expression includes one or more terms related to the plurality of transmission occasions, and
the one or more terms are related to one of, or a combination of two or more of the following:

a number of transmission occasions included in one period,
an interval between adjacent transmission occasions included in one period, and
an offset value for the process identifiers.

(Supplementary Note 7)

The terminal apparatus according to supplementary note 5 or 6, wherein the configuration information includes one of, or a combination of two or more of the following:

a number of transmission occasions included in one period,
an interval between adjacent transmission occasions included in one period, and
an offset value for the process identifiers.

(Supplementary Note 8)

The terminal apparatus according to supplementary note 4, wherein the controller is configured to switch the mathematical expression to be used between, according to the configuration information,

the mathematical expression and
another mathematical expression different from the mathematical expression, the other mathematical expression being used in a case where one period includes one transmission occasion.

(Supplementary Note 9)

The terminal apparatus according to supplementary note 4, wherein

the configuration information includes a plurality of parameters corresponding to the plurality of respective transmission occasions, and
the controller is configured to apply the plurality of parameters to the mathematical expression and thereby calculate a plurality of mathematical expressions to be individually used for the plurality of respective transmission occasions.

(Supplementary Note 10)

The terminal apparatus according to supplementary note 9, wherein

each of the plurality of mathematical expressions includes one or more terms related to the plurality of transmission occasions, and
the one or more terms are related to one of, or a combination of two or more of the following:

a number of transmission occasions included in one period,
an interval between adjacent transmission occasions included in one period,
a number of HARQ processes corresponding to the plurality of respective transmission occasions, and
an offset value for the process identifiers corresponding to the plurality of respective transmission occasions.

(Supplementary Note 11)

The terminal apparatus according to supplementary note 9 or 10, wherein the configuration information includes one of, or a combination of two or more of the following:

a number of transmission occasions included in one period,
an interval between adjacent transmission occasions included in one period,
a number of HARQ processes corresponding to the plurality of respective transmission occasions, and
an offset value for the process identifiers corresponding to the plurality of respective transmission occasions.

(Supplementary Note 12)

The terminal apparatus according to supplementary note 1, wherein

the controller is configured to determine the process identifiers to be associated with the plurality of respective transmission occasions to increase or decrease the process identifiers by a certain value, and
the configuration information includes at least one of the certain value and the process identifier of a first transmission occasion of the plurality of transmission occasions.

(Supplementary Note 13)

The terminal apparatus according to supplementary note 12, wherein the communicator is configured to receive the configuration information from a base station apparatus (20).

(Supplementary Note 14)

The terminal apparatus according to supplementary note 12, wherein the communicator is configured to transmit information including the process identifier of the first transmission occasion of the plurality of transmission occasions, to a base station apparatus (20).

(Supplementary Note 15)

The terminal apparatus according to any one of supplementary notes 1 to 14, wherein the process identifiers of two adjacent transmission occasions of the plurality of transmission occasions are different from each other.

(Supplementary Note 16)

The terminal apparatus according to any one of supplementary notes 1 to 15, wherein

the communicator is configured to receive information indicating that dynamic indication is enabled, from a base station apparatus (20),
the dynamic indication is to indicate an unused occasion of the plurality of transmission occasions, to the base station apparatus, and
the communicator is configured to transmit the dynamic indication to the base station apparatus.

(Supplementary Note 17)

The terminal apparatus according to supplementary note 16, wherein

the information indicating that the dynamic indication is enabled indicates that the dynamic indication is enabled, for each of the process identifiers, and

the communicator is configured to transmit the dynamic indication for each of the process identifiers to the base station apparatus.

(Supplementary Note 18)

The terminal apparatus according to supplementary note 16 or 17, wherein the controller is configured to determine a size of the information corresponding to the dynamic indication, based on the configuration information.

(Supplementary Note 19)

The terminal apparatus according to supplementary note 2, wherein

the configuration information includes a parameter related to a plurality of mathematical expressions for determining the process identifiers,

the controller is configured to determine, by using the plurality of mathematical expressions, the process identifiers to be associated with the plurality of respective transmission occasions, and

the plurality of mathematical expressions include a first mathematical expression to be applied to a first valid or configured occasion of the plurality of transmission occasions and a second mathematical expression to be applied to an occasion other than the first occasion of the plurality of transmission occasions.

(Supplementary Note 20)

The terminal apparatus according to supplementary note 19, wherein the second mathematical expression includes at least a third mathematical expression including modulo operation for a first value obtained by increasing the process identifier in the period by a certain value and addition operation of a second value for a value obtained by the modulo operation.

(Supplementary Note 21)

The terminal apparatus according to supplementary note 20, wherein

the configuration information includes, as the parameter, an offset value to be used in a case where a plurality of CGs are configured, and

the second value is the offset value.

(Supplementary Note 22)

The terminal apparatus according to supplementary note 21, wherein

the modulo operation includes performing modulo operation on the first value by the third value, and

the third value is a value obtained by adding a number of HARQ processes and the second value.

(Supplementary Note 23)

The terminal apparatus according to supplementary note 22, wherein the controller is configured to use the third mathematical expression in a case where the first value is equal to or greater than the third value.

(Supplementary Note 24)

The terminal apparatus according to supplementary note 23, wherein the controller is configured to use a fourth mathematical expression, which is different from the third mathematical expression, as the second mathematical expression in a case where the first value is smaller than the third value.

(Supplementary Note 25)

A method of a terminal apparatus (10), the method including:

determining, by using configuration information related to a plurality of transmission occasions included in one period in configured grant (CG), hybrid automatic repeat request (HARQ) process identifiers to be associated with the plurality of respective transmission occasions; and
performing uplink transmissions corresponding to the HARQ processes.

(Supplementary Note 26)

A program causing a processor (101) in a terminal apparatus (10) to execute:

determining, by using configuration information related to a plurality of transmission occasions included in one period in configured grant (CG), hybrid automatic repeat request (HARQ) process identifiers to be associated with the plurality of respective transmission occasions; and
performing uplink transmissions corresponding to the HARQ processes.

(Supplementary Note 27)

A non-transitory tangible recording medium having recorded thereon a program causing a processor (101) in a terminal apparatus (10) to execute:

determining, by using configuration information related to a plurality of transmission occasions included in one period in configured grant (CG), hybrid automatic repeat request (HARQ) process identifiers to be associated with the plurality of respective transmission occasions; and
performing uplink transmissions corresponding to the HARQ processes.

(Supplementary Note 28)

A base station apparatus (20) including:

a controller (210) configured to determine, by using configuration information related to a plurality of transmission occasions included in one period in configured grant (CG), hybrid automatic repeat request (HARQ) process identifiers to be associated with the plurality of respective transmission occasions; and
a communicator (220) configured to receive uplink transmissions corresponding to the HARQ processes from a terminal apparatus (10).

(Supplementary Note 29)

The base station apparatus according to supplementary note 28, wherein the communicator is configured to transmit the configuration information to the terminal apparatus.

(Supplementary Note 30)

The base station apparatus according to supplementary note 29, wherein the configuration information includes information indicating the process identifiers of the plurality of respective transmission occasions.

(Supplementary Note 31)

The base station apparatus according to supplementary note 29, wherein

the configuration information is information indicating use of a mathematical expression for the plurality of transmission occasions, and
the controller is configured to determine, by using the mathematical expression, the process identifiers to be associated with the plurality of respective transmission occasions.

(Supplementary Note 32)

The base station apparatus according to supplementary note 31, wherein the mathematical expression is a mathematical expression used commonly for the plurality of transmission occasions.

(Supplementary Note 33)

The base station apparatus according to supplementary note 32, wherein

the mathematical expression includes one or more terms related to the plurality of transmission occasions, and
the one or more terms are related to one of, or a combination of two or more of the following:

a number of transmission occasions included in one period,
an interval between adjacent transmission occasions included in one period, and
an offset value for the process identifiers.

(Supplementary Note 34)

The base station apparatus according to supplementary note 32 or 33, wherein the configuration information includes one of, or a combination of two or more of the following:

a number of transmission occasions included in one period,
an interval between adjacent transmission occasions included in one period, and
an offset value for the process identifiers.

(Supplementary Note 35)

The base station apparatus according to supplementary note 31, wherein the controller is configured to switch the mathematical expression to be used between, according to the configuration information,

the mathematical expression and
another mathematical expression different from the mathematical expression, the other mathematical expression being used in a case where one period includes one transmission occasion.

(Supplementary Note 36)

The base station apparatus according to supplementary note 31, wherein

the configuration information includes a plurality of parameters corresponding to the plurality of respective transmission occasions, and
the controller is configured to apply the plurality of parameters to the mathematical expression and thereby calculate a plurality of mathematical expressions to be individually used for the plurality of respective transmission occasions.

(Supplementary Note 37)

The base station apparatus according to supplementary note 36, wherein

each of the plurality of mathematical expressions includes one or more terms related to the plurality of transmission occasions, and
the one or more terms are related to one of, or a combination of two or more of the following:

a number of transmission occasions included in one period,
an interval between adjacent transmission occasions included in one period,
a number of HARQ processes corresponding to the plurality of respective transmission occasions, and
an offset value for the process identifiers corresponding to the plurality of respective transmission occasions.

(Supplementary Note 38)

The base station apparatus according to supplementary note 36 or 37, wherein the configuration information includes one of, or a combination of two or more of the following:

a number of transmission occasions included in one period,
an interval between adjacent transmission occasions included in one period,

a number of HARQ processes corresponding to the plurality of respective transmission occasions, and
an offset value for the process identifiers corresponding to the plurality of respective transmission occasions.

(Supplementary Note 39)

The base station apparatus according to supplementary note 28, wherein the controller is configured to determine the process identifiers to be associated with the plurality of respective transmission occasions to increase or decrease the process identifiers by a certain value.

(Supplementary Note 40)

The base station apparatus according to supplementary note 39, wherein the configuration information includes at least one of the certain value and the process identifier of a first transmission occasion of the plurality of transmission occasions.

(Supplementary Note 41)

The base station apparatus according to supplementary note 39, wherein the communicator is configured to receive, as the configuration information, information including the process identifier of a first transmission occasion of the plurality of transmission occasions, from the terminal apparatus.

(Supplementary Note 42)

The base station apparatus according to any one of supplementary notes 28 to 41, wherein the process identifiers of two adjacent transmission occasions of the plurality of transmission occasions are different from each other.

(Supplementary Note 43)

The base station apparatus according to any one of supplementary notes 28 to 42, wherein

the communicator is configured to transmit information indicating that dynamic indication is enabled, to the terminal apparatus, and
the dynamic indication is to indicate an unused occasion of the plurality of transmission occasions, to the base station apparatus.

(Supplementary Note 44)

The base station apparatus according to supplementary note 43, wherein
the information indicating that the dynamic indication is enabled indicates that the dynamic indication is enabled, for each of the process identifiers.

(Supplementary Note 45)

The base station apparatus according to supplementary note 29, wherein

the configuration information includes a parameter related to a plurality of mathematical expressions for determining the process identifiers,
the controller is configured to determine, by using the plurality of mathematical expressions, the process identifiers to be associated with the plurality of respective transmission occasions, and
the plurality of mathematical expressions include a first mathematical expression to be applied to a first valid or configured occasion of the plurality of transmission occasions and a second mathematical expression to be applied to an occasion other than the first occasion of the plurality of transmission occasions.

(Supplementary Note 46)

The base station apparatus according to supplementary note 45, wherein the second mathematical expression includes at least a third mathematical expression including modulo operation for a first value obtained by increasing the process identifier in the period by a certain value and addition operation of a second value for a value obtained by the modulo operation.

(Supplementary Note 47)

The base station apparatus according to supplementary note 46, wherein

the configuration information includes, as the parameter, an offset value to be used in a case where a plurality of CGs are configured, and
the second value is the offset value.

(Supplementary Note 48)

The base station apparatus according to supplementary note 47, wherein

the modulo operation includes performing modulo operation on the first value by the third value, and
the third value is a value obtained by adding a number of HARQ processes and the second value.

(Supplementary Note 49)

The base station apparatus according to supplementary note 48, wherein the controller is configured to use the third mathematical expression in a case where the first value is equal to or greater than the third value.

(Supplementary Note 50)

The base station apparatus according to supplementary note 49, wherein the controller is configured to use a fourth mathematical expression, which is different from the third mathematical expression, as the second mathematical expression in a case where the first value is smaller than the third value.

(Supplementary Note 51)

A method of a base station apparatus (20), the method including:

determining, by using configuration information related to a plurality of transmission occasions included in one period in configured grant (CG), hybrid automatic repeat request (HARQ) process identifiers to be associated with the plurality of respective transmission occasions; and
receiving uplink transmissions corresponding to the HARQ processes from a terminal apparatus (10).

(Supplementary Note 52)

A program causing a processor (201) in a base station apparatus (20) to execute:

determining, by using configuration information related to a plurality of transmission occasions included in one period in configured grant (CG), hybrid automatic repeat request (HARQ) process identifiers to be associated with the plurality of respective transmission occasions; and
receiving uplink transmissions corresponding to the HARQ processes from a terminal apparatus (10).

(Supplementary Note 53)

A non-transitory tangible recording medium having recorded thereon a program causing a processor (201) in a base station apparatus (20) to execute:

determining, by using configuration information related to a plurality of transmission occasions included in one period in configured grant (CG), hybrid automatic repeat request (HARQ) process identifiers to be associated with the plurality of respective transmission occasions; and
receiving uplink transmissions corresponding to the HARQ processes from a terminal apparatus (10).

(Supplementary Note 54)

A terminal apparatus (10) including:

a controller (110) configured to determine hybrid automatic repeat request (HARQ) process identifiers to be associated with a plurality of respective transmission occasions included in one period in configured grant (CG); and a communicator (120) configured to transmit information including the process identifiers to a base station apparatus (20).

(Supplementary Note 55)

The terminal apparatus according to supplementary note 54, wherein the communicator is configured to receive transmission indication information indicating transmission of the information to the base station apparatus, from the base station apparatus.

(Supplementary Note 56)

The terminal apparatus according to supplementary note 54 or 55, wherein the communicator is configured to transmit information including the process identifiers, in each of the plurality of transmission occasions, to the base station apparatus.

(Supplementary Note 57)

The terminal apparatus according to supplementary note 54 or 55, wherein the communicator is configured to transmit information including the plurality of process identifiers corresponding to the plurality of transmission occasions, in a first transmission occasion of the plurality of transmission occasions, to the base station apparatus.

(Supplementary Note 58)

The terminal apparatus according to any one of supplementary notes 54 to 57, wherein the controller is configured to determine a size of the information including the process identifiers, based on a number of the plurality of transmission occasions or a number of transmission occasions to be actually used of the plurality of transmission occasions.

(Supplementary Note 59)

A method of a terminal apparatus (10), the method including:

determining hybrid automatic repeat request (HARQ) process identifiers to be associated with a plurality of respective transmission occasions included in one period in configured grant (CG); and transmitting information including the process identifiers to a base station apparatus (20).

(Supplementary Note 60)

A program causing a processor (101) in a terminal apparatus (10) to execute:

determining hybrid automatic repeat request (HARQ) process identifiers to be associated with a plurality of respective transmission occasions included in one period in configured grant (CG); and transmitting information including the process identifiers to a base station apparatus (20).

(Supplementary Note 61)

A non-transitory tangible recording medium having recorded thereon a program causing a processor (101) in a terminal apparatus (10) to execute:

determining hybrid automatic repeat request (HARQ) process identifiers to be associated with a plurality of respective transmission occasions included in one period in configured grant (CG); and transmitting information including the process identifiers to a base station apparatus (20).

(Supplementary Note 62)

A terminal apparatus (10) including:

a receiver (122) configured to receive, from a base station apparatus (20), a radio resource control (RRC) message including a configured grant (CG) configuration for configuring transmission of a physical uplink shared channel (PUSCH) based on a CG grant;
a controller (110) configured to determine, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and
a transmitter (121) configured to perform each of the plurality of PUSCH transmissions related to the HARQ process ID, in the periodicity.

(Supplementary Note 63)

The terminal apparatus according to supplementary note 62, wherein

the information is first information,
the CG configuration includes second information for configuring the periodicity and third information for configuring a number of HARQ process IDs, and
the controller is configured to determine the HARQ process ID associated with each of the plurality of PUSCH transmissions, based on the first information, the offset value for the HARQ process ID, the second information, and the third information by using a mathematical expression.

(Supplementary Note 64)

The terminal apparatus according to supplementary note 63, wherein

the offset value is a first offset value,
the mathematical expression is a first mathematical expression, and
the controller is configured to determine, in a case where fourth information for configuring a second offset value for the HARQ process ID is included in the CG configuration, the HARQ process ID associated with each of the plurality of PUSCH transmissions, based on the first information, the first offset value for the HARQ process ID, the second information, the third information, and the fourth information by using a second mathematical expression.

(Supplementary Note 65)

The terminal apparatus according to supplementary note 63, wherein

the mathematical expression is a first mathematical expression,
the controller is configured to determine, in a case where the first information is not included in the CG configuration, an HARQ process ID associated with a PUSCH transmission in the periodicity, based on the second information and the third information by using a second mathematical expression, and
the transmitter is configured to perform the PUSCH transmission related to the HARQ process ID, in the periodicity.

(Supplementary Note 66)

The terminal apparatus according to supplementary note 64, wherein

the controller is configured to determine, in a case where the first information is not included in the CG configuration, an HARQ process ID associated with a PUSCH transmission in the periodicity, based on the second information and the third information by using a third mathematical expression, and
the transmitter is configured to perform the PUSCH transmission related to the HARQ process ID, in the periodicity.

(Supplementary Note 67)

The terminal apparatus according to any one of supplementary notes 62 to 66, wherein the CG configuration is configured for each of one or more uplink bandwidth parts (BWPs).

(Supplementary Note 68)

The terminal apparatus according to any one of supplementary notes 62 to 67, wherein the PUSCH transmissions include Type 1 PUSCH transmission based on the CG and Type 2 PUSCH transmission based on the CG.

(Supplementary Note 69)

A method of a terminal apparatus (10), the method including:

receiving, from a base station apparatus (20), a radio resource control (RRC) message including a configured grant (CG) configuration for configuring transmission of a physical uplink shared channel (PUSCH) based on a CG grant; determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and performing each of the plurality of PUSCH transmissions related to the HARQ process ID, in the periodicity.

(Supplementary Note 70)

The method according to supplementary note 69, wherein

the information is first information, and the CG configuration includes second information for configuring the periodicity and third information for configuring a number of HARQ process IDs, the method comprising determining the HARQ process ID associated with each of the plurality of PUSCH transmissions, based on the first information, the offset value for the HARQ process ID, the second information, and the third information by using a mathematical expression.

(Supplementary Note 71)

The method according to supplementary note 70, wherein

the offset value is a first offset value, and the mathematical expression is a first mathematical expression, the method comprising determining, in a case where fourth information for configuring a second offset value for the HARQ process ID is included in the CG configuration, the HARQ process ID associated with each of the plurality of PUSCH transmissions, based on the first information, the first offset value for the HARQ process ID, the second information, the third information, and the fourth information by using a second mathematical expression.

(Supplementary Note 72)

The method according to supplementary note 70, wherein
the mathematical expression is a first mathematical expression, the method comprising:

determining, in a case where the first information is not included in the CG configuration, an HARQ process ID associated with a PUSCH transmission in the periodicity, based on the second information and the third information by using a second mathematical expression; and performing the PUSCH transmission related to the HARQ process ID, in the periodicity.

(Supplementary Note 73)

The method according to supplementary note 71, the method including:

determining, in a case where the first information is not included in the CG configuration, an HARQ process ID associated with a PUSCH transmission in the periodicity, based on the second information and the third information by using a third mathematical expression; and

performing the PUSCH transmission related to the HARQ process ID, in the periodicity.

(Supplementary Note 74)

The method according to any one of supplementary notes 69 to 73, wherein the CG configuration is configured for each of one or more uplink bandwidth parts (BWPs).

(Supplementary Note 75)

The method according to any one of supplementary notes 69 to 74, wherein the PUSCH transmissions include Type 1 PUSCH transmission based on the CG and Type 2 PUSCH transmission based on the CG.

(Supplementary Note 76)

A program causing a processor (101) in a terminal apparatus (10) to execute:

receiving, from a base station apparatus (20), a radio resource control (RRC) message including a configured grant (CG) configuration for configuring transmission of a physical uplink shared channel (PUSCH) based on a CG grant; determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and

performing each of the plurality of PUSCH transmissions related to the HARQ process ID, in the periodicity.

(Supplementary Note 77)

A non-transitory tangible recording medium having recorded thereon a program causing a processor (101) in a terminal apparatus (10) to execute:

receiving, from a base station apparatus (20), a radio resource control (RRC) message including a configured grant (CG) configuration for configuring transmission of a physical uplink shared channel (PUSCH) based on a CG grant; determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and

performing each of the plurality of PUSCH transmissions related to the HARQ process ID, in the periodicity.

(Supplementary Note 78)

A base station apparatus (20) including:

a transmitter (221) configured to transmit, to a terminal apparatus (10), a radio resource control (RRC) message including a configured grant (CG) configuration for configuring transmission of a physical uplink shared channel (PUSCH) based on a CG grant; a controller (210) configured to determine, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and

a receiver (222) configured to receive each of the plurality of PUSCH transmissions related to the HARQ process ID, in the periodicity.

(Supplementary Note 79)

The base station apparatus according to supplementary note 78, wherein

the information is first information,

the CG configuration includes second information for configuring the periodicity and third information for configuring a number of HARQ process IDs, and

the controller is configured to determine the HARQ process ID associated with each of the plurality of PUSCH transmissions, based on the first information, the offset value for the HARQ process ID, the second information, and the third information by using a mathematical expression.

(Supplementary Note 80)

The base station apparatus according to supplementary note 79, wherein

the offset value is a first offset value,

the mathematical expression is a first mathematical expression, and

the controller is configured to determine, in a case where fourth information for configuring a second offset value of the HARQ process ID is included in the CG configuration, the HARQ process ID associated with each of the plurality of PUSCH transmissions, based on the first information, the first offset value for the HARQ process ID, the second information, the third information, and the fourth information by using a second mathematical expression.

(Supplementary Note 81)

The base station apparatus according to supplementary note 79, wherein

the mathematical expression is a first mathematical expression,

the controller is configured to determine, in a case where the first information is not included in the CG configuration, an HARQ process ID associated with a PUSCH transmission in the periodicity, based on the second information and the third information by using a second mathematical expression, and

the receiver is configured to receive the PUSCH transmission related to the HARQ process ID, in the periodicity.

(Supplementary Note 82)

The base station apparatus according to supplementary note 80, wherein

the controller is configured to determine, in a case where the first information is not included in the CG configuration, an HARQ process ID associated with a PUSCH transmission in the periodicity, based on the second information and the third information by using a third mathematical expression, and

the receiver is configured to receive the PUSCH transmission related to the HARQ process ID, in the periodicity.

(Supplementary Note 83)

The base station apparatus according to any one of supplementary notes 78 to 82, wherein the CG configuration is configured for one or each of a plurality of uplink bandwidth parts (BWPs).

(Supplementary Note 84)

The base station apparatus according to any one of supplementary notes 78 to 83, wherein the PUSCH transmissions include Type 1 PUSCH transmission based on the CG and Type 2 PUSCH transmission based on the CG.

(Supplementary Note 85)

A method of a base station apparatus (20), the method including:

transmitting, to a terminal apparatus (10), a radio resource control (RRC) message including a configured grant (CG) configuration for configuring transmission of a physical uplink shared channel (PUSCH) based on a CG grant;

determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and

receiving each of the plurality of PUSCH transmissions related to the HARQ process ID, in the periodicity.

(Supplementary Note 85)

A program causing a processor (201) in a base station apparatus (20) to execute:

transmitting, to a terminal apparatus (10), a radio resource control (RRC) message including a configured grant (CG) configuration for configuring transmission of a physical uplink shared channel (PUSCH) based on a CG grant; determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and receiving each of the plurality of PUSCH transmissions related to the HARQ process ID, in the periodicity.

(Supplementary Note 85)

A non-transitory tangible recording medium having recorded thereon a program causing a processor (201) in a base station apparatus (20) to execute:

transmitting, to a terminal apparatus (10), a radio resource control (RRC) message including a configured grant (CG) configuration for configuring transmission of a physical uplink shared channel (PUSCH) based on a CG grant; determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and receiving each of the plurality of PUSCH transmissions related to the HARQ process ID, in the periodicity.

The disclosure contents of the above-mentioned related art documents and reference literature are incorporated herein by reference.

**Claims**

1. A terminal apparatus (10) comprising:

a receiver (122) configured to receive, from a base station apparatus (20), a radio resource control (RRC) message including a configured grant (CG) configuration for configuring transmission of a physical uplink shared channel (PUSCH) based on a CG grant; a controller (110) configured to determine, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and a transmitter (121) configured to perform each of the plurality of PUSCH transmissions related to the HARQ process ID, in the periodicity.

2. The terminal apparatus according to claim 1, wherein

the information is first information, the CG configuration includes second information for configuring the periodicity and third information for configuring a number of HARQ process IDs, and the controller is configured to determine the HARQ process ID associated with each of the plurality of PUSCH transmissions, based on the first information, the offset value for the HARQ process ID, the second information, and the third information by using a mathematical expression.

3. The terminal apparatus according to claim 2, wherein

the offset value is a first offset value, the mathematical expression is a first mathematical expression, and the controller is configured to determine, in a case where fourth information for configuring a second offset value for the HARQ process ID is included in the CG configuration, the HARQ process ID associated with each of the plurality of PUSCH transmissions, based on the first information, the first offset value for the HARQ process ID, the second information, the third information, and the fourth information by using a second mathematical expression.

4. The terminal apparatus according to claim 2, wherein

the mathematical expression is a first mathematical expression,
the controller is configured to determine, in a case where the first information is not included in the CG configuration, an HARQ process ID associated with a PUSCH transmission in the periodicity, based on the second information and the third information by using a second mathematical expression, and
the transmitter is configured to perform the PUSCH transmission related to the HARQ process ID, in the periodicity.

5. The terminal apparatus according to claim 3, wherein

the controller is configured to determine, in a case where the first information is not included in the CG configuration, an HARQ process ID associated with a PUSCH transmission in the periodicity, based on the second information and the third information by using a third mathematical expression, and
the transmitter is configured to perform the PUSCH transmission related to the HARQ process ID, in the periodicity.

6. The terminal apparatus according to any one of claims 1 to 5, wherein the CG configuration is configured for each of one or more uplink bandwidth parts (BWPs).

7. The terminal apparatus according to any one of claims 1 to 6, wherein the PUSCH transmissions include Type 1 PUSCH transmission based on the CG and Type 2 PUSCH transmission based on the CG.

8. A method of a terminal apparatus (10), the method comprising:

receiving, from a base station apparatus (20), a radio resource control (RRC) message including a configured grant (CG) configuration for configuring transmission of a physical uplink shared channel (PUSCH) based on a CG grant;
determining, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and
performing each of the plurality of PUSCH transmissions related to the HARQ process ID, in the periodicity.

9. The method according to claim 8, wherein

the information is first information, and
the CG configuration includes second information for configuring the periodicity and third information for configuring a number of HARQ process IDs,
the method comprising
determining the HARQ process ID associated with each of the plurality of PUSCH transmissions, based on the first information, the offset value for the HARQ process ID, the second information, and the third information by using a mathematical expression.

10. The method according to claim 9, wherein

the offset value is a first offset value, and
the mathematical expression is a first mathematical expression,
the method comprising
determining, in a case where fourth information for configuring a second offset value for the HARQ process ID is included in the CG configuration, the HARQ process ID associated with each of the plurality of PUSCH transmissions, based on the first information, the first offset value for the HARQ process ID, the second information, the third information, and the fourth information by using a second mathematical expression.

11. The method according to claim 9, wherein

the mathematical expression is a first mathematical expression, the method comprising:

> determining, in a case where the first information is not included in the CG configuration, an HARQ process ID associated with a PUSCH transmission in the periodicity, based on the second information and the third information by using a second mathematical expression; and
> performing the PUSCH transmission related to the HARQ process ID, in the periodicity.

12. The method according to claim 10, the method comprising:

> determining, in a case where the first information is not included in the CG configuration, an HARQ process ID associated with a PUSCH transmission in the periodicity, based on the second information and the third information by using a third mathematical expression; and
> performing the one PUSCH transmission related to the HARQ process ID, in the periodicity.

13. The method according to any one of claims 8 to 12, wherein the CG configuration is configured for each of one or more uplink bandwidth parts (BWPs).

14. The method according to any one of claims 8 to 13, wherein the PUSCH transmissions include Type 1 PUSCH transmission based on the CG and Type 2 PUSCH transmission based on the CG.

15. A base station apparatus (20) comprising:

> a transmitter (221) configured to transmit, to a terminal apparatus (10), a radio resource control (RRC) message including a configured grant (CG) configuration for configuring transmission of a physical uplink shared channel (PUSCH) based on a CG grant;
> a controller (210) configured to determine, in a case where information on occasions of a plurality of PUSCH transmissions in a periodicity is included in the CG configuration, a hybrid automatic repeat request process identifier (HARQ process ID) associated with each of the plurality of PUSCH transmissions, based on the information and an offset value for the HARQ process ID; and
> a receiver (222) configured to receive each of the plurality of PUSCH transmissions related to the HARQ process ID, in the periodicity.

16. The base station apparatus according to claim 15, wherein

> the information is first information,
> the CG configuration includes second information for configuring the periodicity and third information for configuring a number of HARQ process IDs, and
> the controller is configured to determine the HARQ process ID associated with each of the plurality of PUSCH transmissions, based on the first information, the offset value for the HARQ process ID, the second information, and the third information by using a mathematical expression.

17. The base station apparatus according to claim 16, wherein

> the offset value is a first offset value,
> the mathematical expression is a first mathematical expression, and
> the controller is configured to determine, in a case where fourth information for configuring a second offset value of the HARQ process ID is included in the CG configuration, the HARQ process ID associated with each of the plurality of PUSCH transmissions, based on the first information, the first offset value for the HARQ process ID, the second information, the third information, and the fourth information by using a second mathematical expression.

18. The base station apparatus according to claim 16, wherein

> the mathematical expression is a first mathematical expression,
> the controller is configured to determine, in a case where the first information is not included in the CG configuration, an HARQ process ID associated with a PUSCH transmission in the periodicity, based on the second information and the third information by using a second mathematical expression, and
> the receiver is configured to receive the PUSCH transmission related to the HARQ process ID, in the periodicity.

**19.** The base station apparatus according to claim 17, wherein

the controller is configured to determine, in a case where the first information is not included in the CG configuration, an HARQ process ID associated with a PUSCH transmission in the periodicity, based on the second information and the third information by using a third mathematical expression, and
the receiver is configured to receive the PUSCH transmission related to the HARQ process ID, in the periodicity.

**20.** The base station apparatus according to any one of claims 15 to 19, wherein the CG configuration is configured for each of one or more uplink bandwidth parts (BWPs).

**21.** The base station apparatus according to any one of claims 15 to 20, wherein the PUSCH transmissions include Type 1 PUSCH transmission based on the CG and Type 2 PUSCH transmission based on the CG.

S

Fig. 1

Fig. 2

Fig. 3

Fig. 4

Fig. 5

20

BASE STATION APPARATUS

201

PROCESSOR

203

NETWORK
INTERFACE

TO
ANOTHER
APPARATUS

205

MEMORY

RADIO INTERFACE

202

204

Fig. 6

EP 4 661 484 A1

20

BASE STATION APPARATUS

220

COMMUNICATOR

210

CONTROLLER

TRANSMITTER ~221

RECEIVER ~222

230

NETWORK COMMUNICATOR

Fig. 7

50

Fig. 8

Fig. 9

Fig. 10

PERIODICITY = 2 × 14 symbols

TRANSMISSION
OCCASION

CURRENT_Symbol     5          33         61          89

Fig. 11

PERIODICITY = 2 × 14 symbols

TRANSMISSION
OCCASION

CURRENT_Symbol  5  10  15    33  38  43    61  66  71

Fig. 12

PERIODICITY = 2 × 14 symbols

TRANSMISSION
OCCASION

| CURRENT_Symbol | 5 | 10 | 15 | | 33 | 38 | 43 | | 61 | 66 | 71 |
|---|---|---|---|---|---|---|---|---|---|---|---|
| HARQ Process ID | 0 | 1 | 2 | | 0 | 1 | 2 | | 0 | 1 | 2 |

P1          P2          P3

Fig. 13

PERIODICITY = 2 × 14 symbols

TRANSMISSION
OCCASION

| CURRENT_Symbol | 5 | 10 | 15 | 33 | 38 | 43 | 61 | 66 | 71 |

| HARQ Process ID | 1 | 2 | 3 | 6 | 7 | 8 | 12 | 13 | 14 |

P1   P2   P3

Fig. 14

PERIODICITY = 2 × 14 symbols

TRANSMISSION
OCCASION

CURRENT_Symbol    5    10    15         33    38    43         61    66    71

HARQ Process ID    0    2    4          1    3    5          0    2    4

1501

1502

1503

P1                              P2                              P3

Fig. 15

PERIODICITY = 2 × 14 symbols

TRANSMISSION
OCCASION

CURRENT_Symbol    5    10    15      33    38    43

HARQ Process ID    0    1    2      1    2    3

P1        P2

Fig. 16

PERIODICITY = 2 × 14 symbols

TRANSMISSION
OCCASION

CURRENT_Symbol    5    10    15         33    38    43

HARQ Process ID    0    1    2          1    2    3

UCI    UCI    UCI        UCI    UCI    UCI

P1                                  P2

Fig. 17

Fig. 18

Fig. 19

Fig. 20

Fig. 21

# EP 4 661 484 A1

## INTERNATIONAL SEARCH REPORT

| | International application No. |
|---|---|
| | **PCT/JP2023/047208** |

### A. CLASSIFICATION OF SUBJECT MATTER

***H04W 28/04***(2009.01)i; ***H04W 72/115***(2023.01)i; ***H04W 72/1268***(2023.01)i; ***H04W 72/23***(2023.01)i; ***H04W 72/512***(2023.01)i
FI: H04W28/04 110; H04W72/1268; H04W72/23; H04W72/512; H04W72/115

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | Ericsson, Discussion on capacity enhancements for XR, 3GPP TSG RAN WG1#111 R1-2210923, 07 November 2022<br>    section 2 | 1-2, 6-9, 13-16, 20-21 |
| A | section 2 | 3-5, 10-12, 17-19 |
| Y | OPPO, Discussion on XR specific capacity enhancements techniques, 3GPP TSG RAN WG1#111 R1-2211491, 07 November 2022<br>    section 2 | 1-2, 6-9, 13-16, 20-21 |
| Y | Apple, Clarification on HARQ process ID configuration, 3GPP TSG RAN WG2#113-e R2-2100854, 15 January 2021<br>    section 2 | 1-2, 6-9, 13-16, 20-21 |
| Y | Huawei, HiSilicon, Prioritization between overlapping configured grants, 3GPP TSG RAN WG2#106 R2-1906508, 03 May 2019<br>    section 2 | 6, 13, 20 |

| ☑ Further documents are listed in the continuation of Box C. | ☐ See patent family annex. |
|---|---|

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

65

**INTERNATIONAL SEARCH REPORT**

| International application No. |
| --- |
| **PCT/JP2023/047208** |

**C.    DOCUMENTS CONSIDERED TO BE RELEVANT**

| Category* | Citation of document, with indication, where appropriate, of the relevant passages | Relevant to claim No. |
| --- | --- | --- |
| Y | MediaTek Inc., Simultaneous transmission across multiple UE panels, 3GPP TSG RAN WG1#110 R1-2206997, 12 August 2022<br>        section 2 | 7, 14, 21 |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023015570 A

- JP 2023078777 A

**Non-patent literature cited in the description**

- *3GPP TR 38.838 V17.0.0*, December 2021

- *3GPP TS 38.321 V17.2.0*, September 2022